# EUROPEAN PATENT APPLICATION

(11) **EP 4 832 540 A1**
(43) Date of publication of application: **28.10.2026**
(21) Application number: 23961852.3
(22) Date of filing: 20.12.2023
(51) Int. Cl.: H04W 16/14

(54) **WIRELESS COMMUNICATION METHOD AND APPARATUS, DEVICE, AND STORAGE MEDIUM**

(71) Applicant: GUANGDONG OPPO MOBILE TELECOMMUNICATIONS CORP., LTD., Dongguan, Guangdong 523860 (CN)
(72) Inventor: WU, Zuomin, Dongguan, Guangdong 523860 (CN)
(74) Representative: Grassi, Stefano
(86) International application number: PCT/CN2023/140399
(87) International publication number: WO 2025/129513

(57) **Abstract**

A wireless communication method and apparatus, a device, and a storage medium, relating to the technical field of communications. The method is performed by a first network device, and comprises: receiving first information sent by a second network device, the first information being used for determining whether a first network device is allowed to communicate using a first spectrum resource, and the first spectrum resource being a spectrum resource used by the second network device for communication (410); and when it is determined on the basis of the first information that the first network device is allowed to communicate using the first spectrum resource, performing communication using the first spectrum resource in a first communication network (420). Whether the first network device can communicate using the first spectrum resource is determined by means of the first information sent by the second network device, so that the first network device can share the spectrum resource with the second network device, effectively avoiding or mitigating interference in the communication signal transmission between two or more networks sharing the spectrum resource, and improving the reliability of signal transmission.

## Description

### TECHNICAL FIELD

Embodiments of the present disclosure relates to the technical field of communications, and more particularly to, a method and device for wireless communication, a device and a storage medium.

### BACKGROUND

In a communication network, transmission of a signal is performed through a spectrum resource. Since the spectrum resource is a scarce resource, in some scenarios, it may be necessary to share the spectrum resource between two or more networks. For example, the Terrestrial Network (TN) shares the spectrum resource with the Non Terrestrial Network (NTN). In the scenario of sharing the spectrum resource, how to avoid or reduce the interference of communication signal transmission between two or more networks sharing the spectrum resource to improve the reliability of signal transmission is required to be further studied.

### SUMMARY

Embodiments of the present disclosure provide a method and device for wireless communication, a device and a storage medium. The technical solutions are as follows.

According to an aspect of the embodiments of the present disclosure, there is provided a method for wireless communication performed by a first network device. The method includes following operations.

First information sent by a second network device is received. The first information is used for determining whether the first network device is allowed to perform communication using a first spectrum resource. The first spectrum resource is a spectrum resource used by the second network device for communication. The first network device is a network device in a first communication network. The second network device is a network device in a second communication network. The first communication network and the second communication network are different communication networks.

In a case of determining, based on the first information, that the first network device is allowed to perform communication using the first spectrum resource, communication is performed using the first spectrum resource in the first communication network.

According to an aspect of the embodiments of the present disclosure, there is provided a method for wireless communication performed by a second network device. The method includes a following operation.

First information is sent to a first network device. The first information is used for determining whether the first network device is allowed to perform communication using a first spectrum resource. The first spectrum resource is a spectrum resource used by the second network device for communication. The first network device is a network device in a first communication network. The second network device is a network device in a second communication network. The first communication network and the second communication network are different communication networks.

According to an aspect of the embodiments of the present disclosure, there is provided a device for wireless communication including a receiving module and a processing module.

The receiving module is configured to receive first information sent by a second network device. The first information is used for determining whether a first network device is allowed to perform communication using a first spectrum resource. The first spectrum resource is a spectrum resource used by the second network device for communication. The first network device is a network device in a first communication network. The second network device is a network device in a second communication network. The first communication network and the second communication network are different communication networks.

The processing module is configured to: in a case of determining, based on the first information, that the first network device is allowed to perform communication using the first spectrum resource, perform communication using the first spectrum resource in the first communication network.

According to an aspect of the embodiments of the present disclosure, there is provided a device for wireless communication including a sending module.

The sending module is configured to send first information to a first network device. The first information is used for determining whether the first network device is allowed to perform communication using a first spectrum resource. The first spectrum resource is a spectrum resource used by a second network device for communication. The first network device is a network device in a first communication network. The second network device is a network device in a second communication network. The first communication network and the second communication network are different communication networks; and
According to an aspect of the embodiments of the present disclosure, there is provided a network device. The network device includes a processor and a memory. The memory stores a computer program. The processor executes the computer program to implement the aforementioned methods for wireless communication.

According to an aspect of the embodiments of the present disclosure, there is provided a computer-readable storage medium. The computer-readable storage medium has stored thereon a computer program that, when executed by at least one processor, implements the aforementioned methods for wireless communication.

According to an aspect of the embodiments of the present disclosure, there is provided a chip. The chip includes a programmable logic circuit and/or program instructions for implementing the aforementioned methods for wireless communication when the chip is running.

According to an aspect of the embodiments of the present disclosure, there is provided a computer program product including computer instructions stored in a computer-readable storage medium. A processor reads and executes the computer instructions from the computer-readable storage medium to implement the aforementioned methods for wireless communication.

The technical solution provided in the embodiments of the present disclosure may include following beneficial effects.

It is determined, through the first information sent by the second network device, whether the first network device is able to use the first spectrum resource to perform the communication, which enables the first network device to share the spectrum resource with the second network device, the interference of communication signal transmission between two or more networks sharing the spectrum resource can be effectively avoided or reduced, and the reliability of the signal transmission is improved.

### BRIEF DESCRIPTION OF THE DRAWINGS

FIG. 1 is a schematic diagram of a network architecture according to an embodiment of the present disclosure.
FIG. 2 is a schematic diagram of a network architecture according to another embodiment of the present disclosure.
FIG. 3 is a schematic diagram of a scenario of sharing a spectrum resource according to an embodiment of the present disclosure.
FIG. 4 is a flowchart of a method for wireless communication according to an embodiment of the present disclosure.
FIG. 5 is a schematic diagram of a time unit configuration pattern according to an embodiment of the present disclosure.
FIG. 6 is a schematic diagram of a time unit configuration pattern according to another embodiment of the present disclosure.
FIG. 7 is a schematic diagram of a time unit configuration pattern according to another embodiment of the present disclosure.
FIG. 8 is a schematic diagram of a time unit configuration pattern according to another embodiment of the present disclosure.
FIG. 9 is a block diagram of a device for wireless communication according to an embodiment of the present disclosure.
FIG. 10 is a block diagram of a device for wireless communication according to another embodiment of the present disclosure.
FIG. 11 is a schematic structural diagram of a network device according to an embodiment of the present disclosure.

### DETAILED DESCRIPTION

In order to make the objectives, technical solutions and advantages of the embodiments of the present disclosure clearer, implementations of the present disclosure will be described in further detail below in combination with the accompanying drawings.

The network architecture and the service scenario described in the embodiments of the present disclosure are for more clearly describing the technical solutions of the embodiments of the present disclosure, and do not constitute a limitation on the technical solutions provided by the embodiments of the present disclosure. It is apparent to those skilled in the art that as the network architecture evolves and new service scenarios emerge, the technical solutions provided by the embodiments of the present disclosure are equally applicable to similar technical problems.

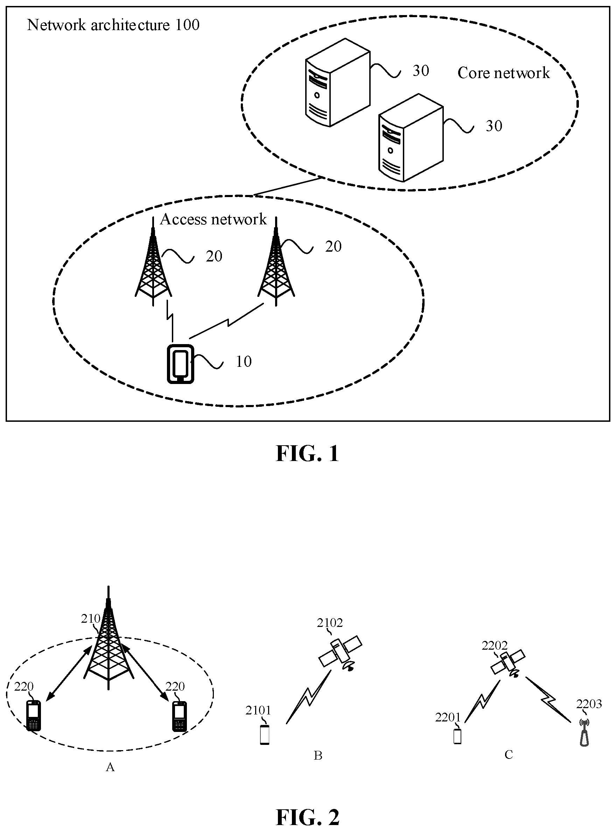

With reference to FIG. 1, a schematic diagram of a network architecture 100 according to an embodiment of the present disclosure is shown. The network architecture 100 may include a terminal device 10, an access network device 20, and a core network element 30.

The terminal device 10 may refer to a User Equipment (UE), a Station (STA), an access terminal, a user unit, a user station, a mobile station, a mobile platform, a remote station, a remote terminal, a mobile device, a wireless communication device, a user agent, or user apparatus. In some embodiments, the terminal device 10 may also be a cellular phone, a cordless phone, a Session Initiation Protocol (SIP) phone, a Wireless Local Loop (WLL) station, a Personal Digital Assistant (PDA), a handheld device with a wireless communication function, a computing device, another processing device connected to a wireless modem, a vehicle-mounted device, a wearable device, a terminal device in a 5th Generation System (5GS), a terminal device in a future evolved Pub1ic Land Mobi1e Network (PLMN), or the like, which is not limited in the embodiments of the present disclosure. For convenience of description, the aforementioned devices are collectively referred to as the terminal device. There are usually multiple terminal devices 10. One or more terminal devices 10 may be distributed within a cell managed by each access network device 20. The terminal device may also be simply referred to as a terminal or UE, and the meaning thereof may be understood by those skilled in the art.

The access network device 20 is a device deployed in the access network and is configured to provide a wireless communication function for the terminal device 10. The access network device 14 may include various forms of macro base stations, micro base stations, relay nodes, access points, and the like. In systems using different radio access technologies, devices having the function of the access network device may have different names, for example, the devices may be called Next Generation Node B (gNodeB or gNB) in the 5G New Radio (NR) system. With the evolution of communication technologies, the name "access network device" may change. For convenience of description, in the embodiments of the present disclosure, the aforementioned devices configured to provide a wireless communication function for the terminal device 10 are collectively referred to as the access network device. In some embodiments, a communication relationship between the terminal device 10 and the core network element 30 may be established through the access network device 20. Exemplarily, in a Long Term Evolution (LTE) system, the access network device 20 may be an Evolved Universal Terrestrial Radio Access Network (EUTRAN) or one or more eNodeBs in the EUTRAN. In the 5G NR system, the access network device 20 may be a Radio Access Network (RAN) or one or more gNBs in the RAN. In the embodiments of the present disclosure, unless otherwise specified, the "network device" refers to the access network device 20, e.g., a base station.

The core network element 30 is a network element deployed in the core network. The function of the core network element 30 is mainly to provide user connection, manage users, and complete the bearing of services, and is provided to an interface of an external network as a bearer network. For example, the core network element of the 5G NR system may include elements, such as an Access and Mobility Management Function (AMF) entity, a User Plane Function (UPF) entity, and a Session Management Function (SMF) entity.

In some embodiments, the access network device 20 communicates with the core network element 30 through a certain air interface technology, e.g., the NG interface in the 5G NR system. The access network device 20 communicates with the terminal device 10 through a certain air interface technology, e.g., the Uu interface.

The "5G NR system" in the embodiments of the disclosure may also be referred to as a 5G system or an NR system. However, those skilled in the art may understand its meaning. The technical solutions described in the embodiment of the present disclosure may be applicable to the LTE system, the 5G NR system, may also be applied to a subsequent evolution system of the 5G NR system (for example, a Beyound 5G (B5G) system, a 6th Generation System), and may also be applied to other communication systems such as a Narrow Band Internet of Things (NB-IoT) system, which is not limited in the present disclosure.

In the embodiments of the present disclosure, the network device may provide services for a cell, and the terminal device communicates with the network device via transmission resources (e.g., frequency-domain resources, or spectrum resources) on the carriers used by the cell. The cell may be a cell corresponding to the network device (e.g., the base station), and the cell may belong to a macro base station or a base station corresponding to a small cell. The small cell may include a metro cell, a micro cell, a pico cell, a femto cell, etc. These small cells have characteristics of small coverage and low transmission power, and are suitable for providing highspeed data transmission services.

Before introducing the technical solution of the present disclosure, related technologies involved in the embodiments of the present disclosure are described below. The following related technologies used as optional solutions may be combined with technical solution of the embodiments of the present disclosure in various ways, and the combinations belong to the scope of protection of the embodiments of the present disclosure. Embodiments of the present disclosure include at least some of the following content.

### 1. Network scenario

Communication system scenarios include the TN and the NTN. In the NTN, satellite communication is generally used for providing communication services to ground users. The NTN system currently include the NR-NTN system and the IoT-NTN system, and other NTN systems may be included in the future.

Exemplarily, FIG. 2A is a schematic diagram of architecture of a communication system according to an embodiment of the present disclosure. As shown in FIG. 2A, the communication system may include a network device 210. The network device 210 may be a device that communicates with a terminal device 220 (or referred to as a communication terminal device or a terminal device). The network device 210 may provide communication coverage for a particular geographic area and may communicate with terminal devices located within the coverage.

FIG. 2A exemplarily illustrates one network device and two terminal devices. In some embodiments of the present disclosure, the communication system may include multiple network devices, and another number of terminal devices may be included in the coverage of each network device, which is not limited in the embodiments of the present disclosure.

Exemplarily, FIG. 2B is a schematic diagram of another architecture of a communication system according to an embodiment of the present disclosure. With reference to FIG. 2B, a terminal device 2101 and a satellite 2102 are included, and the terminal device 2101 may perform the wireless communication with the satellite 2102. The network formed between the terminal device 2101 and the satellite 2102 may also be referred to as the NTN. In the architecture of the communication system shown in FIG. 2B, the satellite 2102 may have the function of the base station, and the terminal device 2101 may directly communicate with the satellite 2102. Within this system architecture, the satellite 2102 may be called the network device. In some embodiments of the present disclosure, multiple network devices 2102 may be included in the communication system, and other numbers of terminal devices may be included within the coverage of each network device 2102, which is not limited in the embodiments of the present disclosure.

In the future evolved communication system, such as the B5G or the 6G, a distributed Multiple-Input Multiple-Output (MIMO) (also called as a distributed antenna system) scenario and/or a massive MIMO (also called as a large-scale antenna matrix system) scenario may also be included. In some cases, the distributed MIMO and/or the massive MIMO may also support a cell-free networking scenario or a UE-centric networking scenario. It is to be understood that the aforementioned scenarios also apply to the TN and/or the NTN. It is to be understood that due to the scarcity of the spectrum resource, the case that the TN needs to share spectrum with the NTN may occur in both the base station-centric networking scenario and the terminal-centric networking scenario.

Exemplarily, FIG. 2C is a schematic diagram of another architecture of a communication system according to an embodiment of the present disclosure. With reference to FIG. 2C, a terminal device 2201, a satellite 2202, and a base station 2203 are included. The terminal device 2201 may perform wireless communication with the satellite 2202. The satellite 2202 may perform communication with the base station 2203. The network formed between the terminal device 2201, the satellite 2202 and the base station 2203 may also be referred to as the NTN. In the architecture of the communication system shown in FIG. 2C, the satellite 2202 may not have the function of the base station, and the communication between the terminal device 2201 and the base station 2203 are required to be forwarded through the satellite 2202. Within this system architecture, the base station 2203 may be referred to as the network device. In some embodiments of the present disclosure, multiple network devices 2203 may be included in the communication system, and other numbers of terminal devices may be included within the coverage of each network device 2203, which is not limited in the embodiments of the present disclosure.

### 2. Limitation of beam direction in the NR system

In the NR system, the initial access procedure of the terminal device may be implemented by detecting a Synchronization Signal/Physical Broadcast Channel (PBCH) block (SSB or SS/PBCH block) on a synchronization raster. The transmission of the SSB is performed through a discovery burst transmission window or an SSB transmission window. The discovery burst transmission window or the SSB transmission window occurs periodically, and the period may be configured by the network device through high layer parameters.

One of the main functions of an SSB index is to enable the UE to obtain system timing information. In addition, the SSB index has another function of indicating the Quasi Co-Location (QCL) relationship between SSBs, which is also understood as that the SSB index indicates the beam direction. The QCL means that large-scale parameters of a channel experienced by symbols on a certain antenna port may be inferred from a channel experienced by symbols on another antenna port. The large-scale parameters may include a delay spread, an average delay, a Doppler spread, a Doppler frequency shift, spatial reception parameters, etc. Specifically, for the SSB, in the 5G system, SSBs carried by different beams constitute an SSB burst set. The different SSB indexes not only correspond to different pieces of SSB time-domain position information in the burst set, but also correspond to specific beam information for the SSB transmission. It is considered that there is a QCL relationship between SSBs with the same SSB index. In other words, the same or similar large-scale parameters of the channel are experienced by the SSBs with the same SSB index. The UE may assume that the network device adopts the same beam for performing the transmission of these SSBs. It is considered that there is no QCL relationship between SSBs corresponding to different SSB indexes, because the SSBs may come from different transmission beams of the network device and experience different transmission characteristics of the channel.

After the terminal device accesses the cell, if there is a service transmission requirement, a random access procedure is required to access the network. The resource configuration in the random access procedure includes Physical Random Access Channel (PRACH) resource configuration, also referred to as PRACH Occasion (RO). The RO is the time-frequency resource carrying a random access preamble. If two-step RACH transmission is supported, the resource configuration in the random access procedure also includes the Physical Uplink Shared Channel (PUSCH) resource configuration, also referred to as PUSCH Occasion (PO). The message A (Msg A) in the two-step RACH includes the Msg A preamble and Msg A PUSCH. The RO is a time-frequency resource used for carrying the Msg A preamble. The PO is a time-frequency resource used for carrying the Msg A PUSCH.

The NR system has a characteristic of supporting downlink multi-beam. Before the network device communicates with the terminal device, the network device needs to know the beam where the terminal device is located, so as to set an appropriate beam direction in the subsequent data transmission procedure. Since the SSB has a mapping relationship with the RO, the terminal device may select, according to a downlink reception beam, the RO associated with the downlink reception beam to send the PRACH or Msg A in the random access procedure. The network device may determine the appropriate downlink reception beam direction for the terminal device after detecting the PRACH or Msg A.

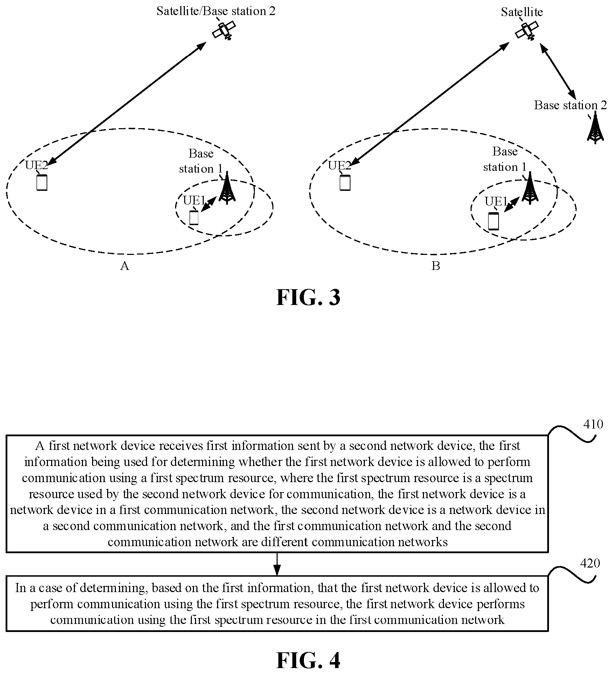

By way of example and not limitation, FIG. 3A and FIG. 3B respectively show schematic diagrams of a scenario where the TN shares the spectrum resource with the NTN.

As shown in FIG. 3A, the base station 1 located on the ground in the TN network may perform wireless communication with the UE 1 located within the communication coverage provided by the base station 1. The base station 2 located on the satellite in the NTN network may perform wireless communication with the UE 2 located within the communication coverage provided by the base station 2. The communication coverage provided by the base station 1 partially or completely overlaps with the communication coverage provided by the base station 2. If the frequency band used for the communication between the base station 1 and the UE 1 partially or completely overlaps with the frequency band used for the communication between the base station 2 and the UE 2, it is necessary to consider how to share the spectrum resource so as to avoid mutual interference between communication transmission between the TN and the NTN, which affects the reliability of communication.

As shown in FIG. 3B, the base station 1 located on the ground in the TN network may perform wireless communication with the UE 1 located within the communication coverage provided by the base station 1. The base station 2 located on the ground in the NTN network may perform, through the forwarding by the satellite, wireless communication with the UE 2 located within the communication coverage area provided by the base station 2. The communication coverage provided by the base station 1 partially or completely overlaps with the communication coverage provided by the base station 2, and/or the location of the base station 1 has a certain association with the location of the base station 2. For example, the base station 1 and the base station 2 are located at the same location or a distance between the base station 1 and the base station 2 is less than or equal to a threshold. If the frequency band used for the communication between the base station 1 and the UE 1 partially or completely overlaps with the frequency band used for the communication between the satellite and the UE 2, and/or, if the frequency band used for the communication between the base station 1 and the UE 1 partially or completely overlaps with the frequency band used for the communication between the satellite and the base station 2, it is necessary to consider how to share the spectrum resource so as to avoid mutual interference between the communication transmission between the TN and the NTN, which affects the reliability of the communication.

In a case of partially or completely overlapping between the frequency bands used for the communications, in order to avoid transmission interference, the frequency resources used by the two networks during the communication may be made orthogonal. For example, at least one of following manners may be considered: space division multiplexing, time division multiplexing, or frequency division multiplexing. Which multiplexing manner to be adopted and how to perform multiplexing after the multiplexing manner is determined are required to be determined by coordination between the network devices in the two networks. Based on the aforementioned considerations, the embodiments of the present disclosure provide the following solutions.

With reference to FIG. 4, a flowchart of a method for wireless communication according to an embodiment of the present disclosure is shown. The method is performed by a first network device. The method includes at least one of following operation 410 to operation 420.

In operation 410, the first network device receives first information sent by a second network device. The first information is used for determining whether the first network device is allowed to perform communication using a first spectrum resource. The first spectrum resource is a spectrum resource used by the second network device for communication. The first network device is a network device in a first communication network. The second network device is a network device in a second communication network. The first communication network and the second communication network are different communication networks.

Correspondingly, the second network device sends the first information to the first network device.

In some embodiments, the first spectrum resource is a shared spectrum resource. In some embodiments, the shared spectrum resource refers to a spectrum resource shared by the second network device and the first network device. In some embodiments, the shared spectrum resource refers to a spectrum resource shared by the second communication network and the first communication network.

In some embodiments, the first spectrum resource is a Frequency Division Duplexing (FDD) spectrum. The FDD is a kind of full-duplex communication technology used in the mobile communication system, and corresponds to the Time-Division Duplex (TDD). The FDD is the technology where two independent channels are used for respectively transferring information downward and upward. In order to prevent interference between adjacent transmitter and receiver, there is a guard band between the two channels. The FDD must adopt the paired frequencies, the uplink and downlink are distinguished relying on frequencies, and resources in a single direction are consecutive in the time. When a symmetric service is supported, i.e., when the requirement for receiving is similar to the requirement for sending, the FDD may make full use of the uplink-downlink spectrum, but when an asymmetric service is supported, a utilization rate of the spectrum will be greatly reduced.

In some embodiments, the first spectrum resource is a TDD spectrum. The TDD is one of the duplex technologies used in the mobile communication technology and corresponds to the FDD. The TDD is a technology of distinguishing wireless channels in time in the downlink operation of the frame period and continues an uplink operation. The TDD technology does not need paired spectrum, but can make use of asymmetric spectrum that cannot be used by the FDD. Combined with the characteristic of a low chip rate of Time-Division Synchronous Code Division Multiple Access (TD-SCDMA), it can deploy in spectral gaps, making it highly flexible in spectrum utilization.

In some embodiments, the first spectrum resource is used for downlink communication. In some embodiments, the first spectrum resource may be used for the first network device to perform downlink communication in the first communication network and used for the second network device to perform downlink communication in the second communication network.

In some embodiments, the first spectrum resource is used for uplink communication. In some embodiments, the first spectrum resource may be used for the first network device to perform uplink communication in the first communication network and used for the second network device to perform uplink communication in the second communication network.

In some embodiments, the first spectrum resource is used for downlink communication and uplink communication. In some embodiments, the first spectrum resource may be used for the first network device to perform the uplink communication and the downlink communication in the first communication network, and may also be used for the second network device to perform the uplink communication and the downlink communication in the second communication network.

In some embodiments, the first network device and the second network device have the same communicate direction when using the first spectrum resource to perform the communication. Exemplarily, both the first network device and the second network device use the first spectrum resource to perform the downlink communication in their respective communication networks. Exemplarily, both the first network device and the second network device use the first spectrum resource to perform the uplink communication in their respective communication networks.

In some embodiments, the first network device and the second network device have different communicate directions when performing the communication using the first spectrum resource. Exemplarily, the first network device uses the first spectrum resource to perform the uplink communication in the first communication network, and the second network device uses the first spectrum resource to perform the downlink communication in the second communication network. Exemplarily, the first network device uses the first spectrum resource to perform the downlink communication in the first communication network, and the second network device uses the first spectrum resource to perform the uplink communication in the second communication network.

In some embodiments, the first information is used for determining at least one of:
the first network device is allowed to performing communication using the first spectrum resource;
the first network device is disallowed to perform communication using the first spectrum resource;
a sharing manner of the first spectrum resource, and the sharing manner including at least one of: time division multiplexing, frequency division multiplexing, or space division multiplexing;
a communication transmission direction for sharing the first spectrum resource, the communication transmission direction including at least one of: uplink, downlink, flexible, or sidelink;
time-domain resource information for allowing the first network device to perform communication using the first spectrum resource;
frequency-domain resource information for allowing the first network device to perform communication using the first spectrum resource;
space-domain resource information for allowing the first network device to perform communication using the first spectrum resource;
a timing reference of the first communication network; or
a timing reference of the second communication network.

In some embodiments, the timing reference of the first communication network includes a timing reference when an uplink time unit is are aligned with a downlink time unit in the first communication network.

In some embodiments, the timing reference of the first communication network includes a timing reference corresponding to the time unit configuration pattern.

In some embodiments, the timing reference of the second communication network includes a timing reference when an uplink time unit is are aligned with a downlink time unit in the second communication network.

In some embodiments, the timing reference of the second communication network includes a timing reference corresponding to the time unit configuration pattern.

In some embodiments, the first information is used for determining at least one of: a time unit configuration pattern, frequency-domain unit configuration information, or QCL configuration information.

In some embodiments, the time unit configuration pattern is used for determining time-domain resource information for allowing the first network device to perform communication using the first spectrum resource, and/or time-domain resource information for allowing the second network device to perform communication using the first spectrum resource.

In some embodiments, the time unit configuration pattern includes a first uplink-downlink configuration pattern and/or a second uplink-downlink configuration pattern. The first uplink-downlink configuration pattern is an uplink-downlink configuration pattern of the first communication network, the second uplink-downlink configuration pattern is an uplink-downlink configuration pattern of the second communication network. The uplink-downlink configuration pattern configures a communication transmission direction of each time unit on the first spectrum resource as one of uplink, downlink, or flexible.

In some embodiments, the time unit configuration pattern includes a first TDD uplink-downlink configuration pattern and/or a second TDD uplink-downlink configuration pattern.

Exemplarily, a communication direction of a time unit configured by the first uplink-downlink configuration pattern is downlink. The first network device may perform the transmission of a downlink channel or signal on the corresponding downlink time unit. Exemplarily, a communication direction of a time unit configured through the first uplink-downlink configuration pattern is uplink. The first network device may perform the transmission of an uplink channel or signal on the corresponding uplink time unit. Exemplarily, a communication direction of a time unit configured through the first uplink-downlink configuration pattern is flexible, and a part or all of the corresponding time units may be used for the second network device to perform the communication. Exemplarily, a part of the time units in the first uplink-downlink configuration pattern are not configured with a communication direction, and a part or all of the time units that are not configured with the communication direction may be used for the second network device to perform the communication.

Exemplarily, a communication direction of a time unit configured through the second uplink-downlink configuration pattern is downlink. The second network device may perform the transmission of a downlink channel or signal on the corresponding downlink time unit. Exemplarily, a communication direction of a time unit configured through the second uplink-downlink configuration pattern is uplink. The second network device may perform the transmission of an uplink channel or signal on the corresponding uplink time unit. Exemplarily, a communication direction of a time unit configured through the second uplink-downlink configuration pattern is flexible, and a part or all of the corresponding time units may be used for the first network device to perform the communication. Exemplarily, a part of the time units in the second uplink-downlink configuration pattern are not configured with a communication direction, and a part or all of the time units that are not configured with the communication direction may be used for the first network device to perform the communication.

In some embodiments, in a case that a sharing manner of the first spectrum resource includes time division multiplexing, if a first time unit is configured to be used for uplink communication in the second uplink-downlink configuration pattern, the first time unit is unable to be configured to be used for uplink communication in the first uplink-downlink configuration pattern, or, the first time unit is unable to be configured to be used for downlink communication in the first uplink-downlink configuration pattern.

In some embodiments, in a case that a sharing manner of the first spectrum resource includes frequency division multiplexing, if a first time unit is configured to be used for uplink communication in the second uplink-downlink configuration pattern, the first time unit may be configured as flexible in the first uplink-downlink configuration pattern, or may not be configured.

In some embodiments, in a case that a sharing manner of the first spectrum resource includes time division multiplexing, if a second time unit is configured to be used for downlink communication in the second uplink-downlink configuration pattern, the second time unit is unable to be configured to be used for downlink communication in the first uplink-downlink configuration pattern, or, the second time unit is unable to be configured to be used for uplink communication in the first uplink-downlink configuration pattern.

In some embodiments, in a case that a sharing manner of the first spectrum resource includes time division multiplexing, if a second time unit is configured to be used for downlink communication in the second uplink-downlink configuration pattern, the second time unit may be configured as flexible in the first uplink-downlink configuration pattern, or may not be configured.

In some embodiments, the frequency-domain unit configuration information is used for determining frequency-domain resource information for allowing the first network device to perform communication using the first spectrum resource, and/or frequency-domain resource information for allowing the second network device to perform communication using the first spectrum resource.

In some embodiments, the frequency-domain unit configuration information is used for determining a first frequency-domain Bandwidth Part (BWP) and/or a second frequency-domain bandwidth part. The first frequency-domain bandwidth part is a frequency-domain unit used by the first communication network, and the second frequency-domain bandwidth part is a frequency-domain unit used by the second communication network.

In some embodiments, the frequency-domain unit configuration information is used for configuring at least one of: a starting position of the first frequency-domain BWP, a length of the first frequency-domain BWP, a starting position of the second frequency-domain BWP, a length of the second frequency-domain BWP, the first frequency-domain BWP being associated with the first network device, or the second frequency-domain BWP being associated with the second network device.

In some embodiments, in a case that a sharing manner of the first spectrum resource includes frequency division multiplexing, the first frequency-domain BWP does not overlap in a frequency domain with the second frequency-domain BWP.

In some embodiments, the QCL configuration information is used for determining space-domain resource information for allowing the first network device to perform communication using the first spectrum resource, and/or space-domain resource information for allowing the second network device to perform communication using the first spectrum resource.

In some embodiments, the QCL configuration information is used for determining a first beam direction and/or a second beam direction. The first beam direction is a beam direction used by the first communication network and the second beam direction is a beam direction used by the second communication network.

In some embodiments, the QCL configuration information is used for determining at least one of: a first SSB set, a second SSB set, or a third SSB set. The first SSB set includes a part or all of SSBs transmitted in the first communication network, the second SSB set includes a part or all of SSBs transmitted in the second communication network, and the third SSB set includes a part or all of SSBs received in the first communication network that are transmitted in the second communication network.

In some embodiments, the SSBs received in the first communication network that are transmitted from the second communication network include: SSBs received by the first network device that are transmitted from the second communication network; and/or SSBs received by the terminal device in the first communication network that are transmitted from the second communication network.

Exemplarily, information (e.g., the second information) sent by the first network device to the second network device is used for determining the first SSB set. Information (e.g., the first information) sent by the second network device to the first network device is used for determining whether one or more SSBs in the first SSB set can be communicated through the first spectrum resource.

Exemplarily, information (e.g., the first information) sent by the second network device to the first network device is used for determining a second SSB set. The first network device determines the first SSB set according to the second SSB set, so as to enable the SSBs in the first SSB set and the SSBs in the second SSB set have different beam directions, thereby reducing the interference.

Exemplarily, information (e.g., the second information) sent by the first network device to the second network device is used for determining a third SSB set that may cause interference to the first communication network. The second network device determines, based on the information, whether the first network device is allowed to perform communication through the first spectrum resource.

In operation 420, in a case of determining, based on the first information, that the first network device is allowed to perform communication using the first spectrum resource, the first network device performs communication using the first spectrum resource in the first communication network.

In some embodiments, the first communication network is the NTN, and the first network device is a network device in the NTN. The second communication network is the TN, and the second network device is a network device in the TN. Exemplarily, the first network device is a satellite and the second network device is a base station. Exemplarily, the first network device is a base station in the NTN, and the second network device is a base station in the TN.

In some embodiments, the first communication network is the TN, and the first network device is a network device in the TN. The second communication network is the NTN, and the second network device is a network device in the NTN. Exemplarily, the first network device is a base station and the second network device is a satellite. Exemplarily, the first network device is a base station in the TN, and the second network device is a base station in the NTN.

In some embodiments, before the operation 410, the method further includes an operation 430.

In operation 430, the first network device sends second information to the second network device. The second information is used for determining at least one of:
a request to the second network device for using the first spectrum resource;
a timing reference of the first communication network; or
a timing reference of the second communication network.

Correspondingly, the second device receives the second information sent by the first device.

According to the technical solutions provided by the embodiment of the present disclosure, it is determined, through the first information sent by the second network device, whether the first network device is able to perform the communication using the first spectrum resource, which enables the first network device to share the spectrum resource with the second network device, the interference of communication signal transmission between two or more networks sharing the spectrum resource can be effectively avoided or reduced, and the reliability of the signal transmission is improved.

The technical solutions provided by the embodiments of the present disclosure will be exemplarily illustrated by taking spectrum resource sharing between the NTN and the TN as an example.
1. The first communication network is the NTN and the second communication network is the TN.

In some embodiments, the first communication network is the NTN and the second communication network is the TN. The first network device is a network device in the NTN. The second network device is a network device in the TN.

In some embodiments, the second information sent by the first network device to the second network device is used for determining at least one of: a request to the second network device for using the first spectrum resource, a timing reference of the first communication network, a timing reference of the second communication network, a first offset, a second offset, first ephemeris information, a first SSB set or a third SSB set.

In some embodiments, the first offset is determined based on a round trip delay of a communication link between a first reference point in the first communication network and a first terminal device in the first communication network.

In some embodiments, the second offset is determined based on a round trip delay of a communication link between the first reference point in the first communication network and the first network device.

In some embodiments, the first ephemeris is ephemeris information in the first communication network. For example, the first ephemeris information is ephemeris information of a serving satellite in the first communication network.

In some embodiments, the first SSB set includes a part or all of SSBs transmitted in the first communication network.

In some embodiments, the third SSB set includes a part or all of SSBs received in the first communication network that are transmitted in the second communication network.

In some embodiments, the SSBs received in the first communication network that are transmitted in the second communication network include:
SSBs received by the first network device that are transmitted in the second communication network; and/or
SSBs received by the terminal device in the first communication network that are transmitted in the second communication network.

In some embodiments, the first information is used for determining at least one of: the first network device is allowed to performing communication using the first spectrum resource, the first network device is disallowed to perform communication using the first spectrum resource, a sharing manner of the first spectrum resource, a communication transmission direction for sharing the first spectrum resource, time-domain resource information for allowing the first network device to perform communication using the first spectrum resource, frequency-domain resource information for allowing the first network device to perform communication using the first spectrum resource, space-domain resource information for allowing the first network device to perform communication using the first spectrum resource, a timing reference of the first communication network, a timing reference of the second communication network, first location information, or a second SSB set.

In some embodiments, the first location information is location information of the second network device.

In some embodiments, the second SSB set includes a part or all of SSBs transmitted in the second communication network.

Exemplarily, with reference to FIG. 3, the base station 1 is the second network device, the UE 1 is a terminal device in the second communication network, and the second communication network is the TN. The base station 2 is the first network device, the UE 2 is a terminal device in the first communication network, and the first communication network is the NTN. In FIG. 3A, the base station 1 in the TN network is able to perform the communication with the UE 1 using the first spectrum resource, and the base station 2 receives the first information sent by the base station 1. The first information is used for determining whether the base station 2 in the NTN network is able to perform the communication with the UE 2 using the first spectrum resource. In FIG. 3B, the base station 1 in the TN network is able to perform the communication with the UE 1 using the first spectrum resource, and the base station 2 receives the first information sent by the base station 1. The first information is used for determining whether the satellite in the NTN network is able to perform the communication with the UE 2 using the first spectrum resource.

The base station 2 sends the second information to the base station 1. The second information is used for the base station 2 to request, to the base station 1, for using the first spectrum resource. The second information may also be used for determining at least one of: the first offset, the second offset, the first ephemeris information, the timing reference of the first communication network, or the first SSB set. The first offset is determined based on a round trip delay of a communication link between a reference point in the NTN network and a terminal device in the NTN. The second offset is determined based on a round trip delay of a communication link between a reference point in the NTN network and a base station 2. The first ephemeris information is ephemeris information of a satellite in the NTN network. The timing reference of the first communication network is a timing reference in the NTN network.

In some embodiments, in the example of FIG. 3A, the reference point in the NAN network is on the satellite. In the example of FIG. 3B, the reference point in the NTN network is on the communication link between the base station 2 and the satellite. In other words, in the example of FIG. 3B, the reference point in the NTN network may be any point (including the base station 2 and the satellite) on the communication link between the base station 2 and the satellite.

The base station 1 determines first information. The first information is used for determining whether the base station 2 is able to perform the communication using the first spectrum resource or a spectrum resource in the first spectrum resource that may be used for the base station 2 to perform the communication. The first information may be determined according to the second information sent by the base station 2, or may not be determined according to the second information.

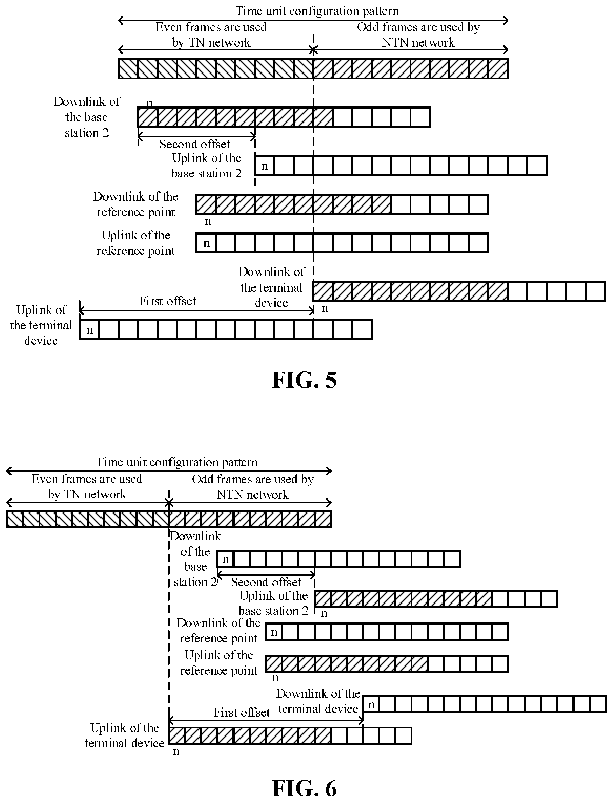

Exemplarily, the first information is used for indicating at least one of: a sharing manner of the first spectrum resource, a communication transmission direction for sharing the first spectrum resource, a time unit configuration pattern, or a timing reference of the second communication network (for example, a timing reference of the TN network). As shown in FIG. 5, a schematic diagram of a time unit configuration pattern is given. The sharing manner of the first spectrum resource is the time division multiplexing, and the communication transmission direction for sharing the first spectrum resource is downlink. The time unit configuration pattern is used for configuring the TN network to use the even frames on the first spectrum resource and/or configuring the NTN network to use the odd frames on the first spectrum resource. The even frames or the odd frames are determined according to the timing reference of the TN network (i.e., the time unit configuration pattern corresponds to the timing reference of the TN network). After receiving the first information, the base station 2 may determine, based on the timing reference of the TN network, the timing reference of the NTN network, the first offset and the second offset, the downlink time unit that may be used by the NTN network on the first spectrum resource-.

As shown in FIG. 5, the odd frames and even frames are determined based on the timing reference of the TN network, whereas the timing reference of the NTN network is aligned with the timing reference of the reference point of the NTN network, and the timing references of the two are different. Therefore, the downlink time unit used by the NTN network on the first spectrum resource is determined based on the timing reference of the TN network and the timing reference of the reference point of the NTN network. Exemplarily, the downlink time unit determined based on the timing reference of the TN network is aligned with the downlink time unit of a certain terminal device in the NTN network (i.e., downlink time units having the same number are aligned). Based on the aforementioned information, the base station 2 may determine a time unit that may be used for downlink communication used by the base station 2 among the downlink time units on the first spectrum resource. It is to be noted that in FIG. 5, the downlink time unit of the terminal device may be a downlink time unit of the UE 2 (a certain terminal device), or may be a downlink time unit of a terminal device at a predefined location, for example, a virtual terminal device. Exemplarily, the location of the virtual terminal device may be the location of the base station 1.

FIG. 6 gives another schematic diagram of a time unit configuration pattern. As shown in FIG. 6, the sharing manner of the first spectrum resource is the time division multiplexing, and the communication transmission direction for sharing the first spectrum resource is uplink. The time unit configuration pattern is used for configuring the TN network to use the even frames on the first spectrum resource and/or configuring the NTN network to use the odd frames on the first spectrum resource. The even frames or the odd frames is determined according to the timing reference of the TN network (i.e., the time unit configuration pattern corresponds to the timing reference of the TN network). After receiving the first indication information, the base station 2 may determine, based on the timing reference of the TN network, the timing reference of the NTN network, the first offset and the second offset, the uplink time unit that may be used by the NTN network on the first spectrum resource.

As shown in FIG. 6, the odd frames and even frames are determined based on the timing reference of the TN network. The timing reference of the NTN network is aligned with the timing reference of the reference point of the NTN network, and the timing references of the two are different. Therefore, the uplink time unit used by the NTN network on the first spectrum resource is determined based on the timing reference of the TN network and the timing reference of the reference point of the NTN network. Exemplarily, the uplink time unit determined based on the timing reference of the TN network is aligned with the uplink time unit of a certain terminal device in the NTN network (i.e., uplink time units having the same number are aligned). Based on the aforementioned information, the base station 2 may determine a time unit for uplink communication that may be used by the base station 2 among the uplink time units on the first spectrum resource. It is to be noted that in FIG. 6, the uplink time unit of the terminal device may be an uplink time unit of the UE 2 (a certain terminal device), or may be an uplink time unit of a terminal device at a predefined location, for example, a virtual terminal device. Exemplarily, the location of the virtual terminal device may be the location of the base station 1.

Exemplarily, the first information is used for determining at least one of: whether the first spectrum resource is able to be used, a sharing manner of the first spectrum resource, or a communication transmission direction for sharing the first spectrum resource. The third SSB set in the second information is used for determining SSBs received by the UE in the NTN network that are in the TN network. The QCL configuration information may be determined based on the third SSB set in the second information. For example, the SSBs transmitted in the TN network are: an SSB0, an SSB1, an SSB2 and an SSB3, and the SSBs that may be received by the UE in the NTN network that are in the TN network are the SSB2 and the SSB3. Therefore, the UE in the NTN network informs the base station 2 of this information, and the base station 2 informs the base station 1 of this information, i.e., the third SSB set includes the SSB2 and the SSB3. After receiving the third SSB set, the base station 1 determines to share the first spectrum resource with the NTN network; and thus updates the SSBs transmitted in the TN network to be the SSB0 and the SSB1; and indicates, in the first information, that the base station 2 is able to use the first spectrum resource and the sharing manner of the first spectrum resource, for example, the space-domain multiplexing, and the communication transmission direction for sharing the first spectrum resource, for example, uplink or downlink. Alternatively, the base station 1 may determine not to share the first spectrum resource with the NTN network, i.e., indicating, in the first information, that the base station 2 is unable to use the first spectrum resource.

The base station 2 receives the first information sent by the base station 1. The first information is used for determining whether the first spectrum resource is able to be used or a spectrum resource available for the base station 2 to perform the communication in the first spectrum resource. In a case that the first spectrum resource is able to be used, the base station 2 determines, based on the first information, the spectrum resource available for the base station 2 to perform the communication in the first spectrum resource, and perform the communication with the UE 2 using the spectrum resource available for the base station 2 to perform the communication in the first spectrum resource.

2. The first communication network is the TN and the second communication network is the NTN.

In some embodiments, the first communication network is the TN and the second communication network is the NTN. The first network device is a network device in the TN. The second network device is a network device in the NTN.

In some embodiments, the first information is used for determining at least one of: the first network device is allowed to performing communication using the first spectrum resource, the first network device is disallowed to perform communication using the first spectrum resource, a sharing manner of the first spectrum resource, a communication transmission direction for sharing the first spectrum resource, time-domain resource information for allowing the first network device to perform communication using the first spectrum resource, frequency-domain resource information for allowing the first network device to perform communication using the first spectrum resource, space-domain resource information for allowing the first network device to perform communication using the first spectrum resource, a timing reference of the first communication network, a timing reference of the second communication network, a third offset, a fourth offset, second ephemeris information, or a second SSB set.

In some embodiments, the third offset is determined based on a round trip delay of a communication link between a second reference point in the second communication network and a second terminal device in the second communication network.

In some embodiments, the fourth offset is determined based on a round trip delay of a communication link between the second reference point in the second communication network and the second network device.

In some embodiments, the second ephemeris information is ephemeris information in the second communication network. For example, the second ephemeris information is ephemeris information of a serving satellite in the second communication network.

In some embodiments, the second SSB set includes a part or all of SSBs transmitted in the second communication network.

In some embodiments, the second information sent by the first network device to the second network device is used for determining at least one of: a request to the second network device for using the first spectrum resource, a timing reference of the first communication network, a timing reference of the second communication network, second location information, a first SSB set or a third SSB set.

In some embodiments, the second location information is location information of the first network device.

In some embodiments, the first SSB set includes a part or all of SSBs transmitted in the first communication network.

In some embodiments, the third SSB set includes a part or all of SSBs received in the first communication network that are transmitted in the second communication network.

In some embodiments, the SSBs received in the first communication network that are transmitted in the second communication network include:
SSBs received by the first network device that are transmitted in the second communication network; and/or
SSBs received by the terminal device in the first communication network that are transmitted in the second communication network.

Exemplarily, the schematic diagrams of a scenario of sharing the spectrum resource shown in FIG. 3A or FIG. 3B are referenced. The base station 1 is the first network device, the UE 1 is a terminal device in the first communication network, and the first communication network is the TN. The base station 2 is the second network device, the UE 2 is a terminal device in the second communication network, and the second communication network is the NTN. In FIG. 3A, the base station 2 in the NTN network is able to perform the communication with the UE 2 using the first spectrum resource, and the base station 1 receives the first information sent by the base station 2. The first information is used for determining whether the base station 1 in the TN network is able to perform the communication with the UE 1 using the first spectrum resource. In FIG. 3B, the satellite in the NTN network is able to perform the communication with the UE 2 using the first spectrum resource, and the base station 1 receives the first information sent by the base station 2. The first information is used for determining whether the base station 1 in the TN network is able to perform the communication with the UE 1 using the first spectrum resource.

The base station 1 sends the second information to the base station 2. The second information is used for the base station 1 to request, to the base station 2, for using the first spectrum resource. The second information may also be used for determining one of: the second location information or the timing reference of the first communication network. The second location information is the location information of the base station 1, and the timing reference of the first communication network is a timing reference in the TN network.

The base station 2 determines first information. The first information is used for determining whether the base station 1 is able to perform the communication using the first spectrum resource or a spectrum resource available for the base station 1 to perform the communication in the first spectrum resource. The first information may be determined according to the second information sent by the base station 1, or may not be determined according to the second information.

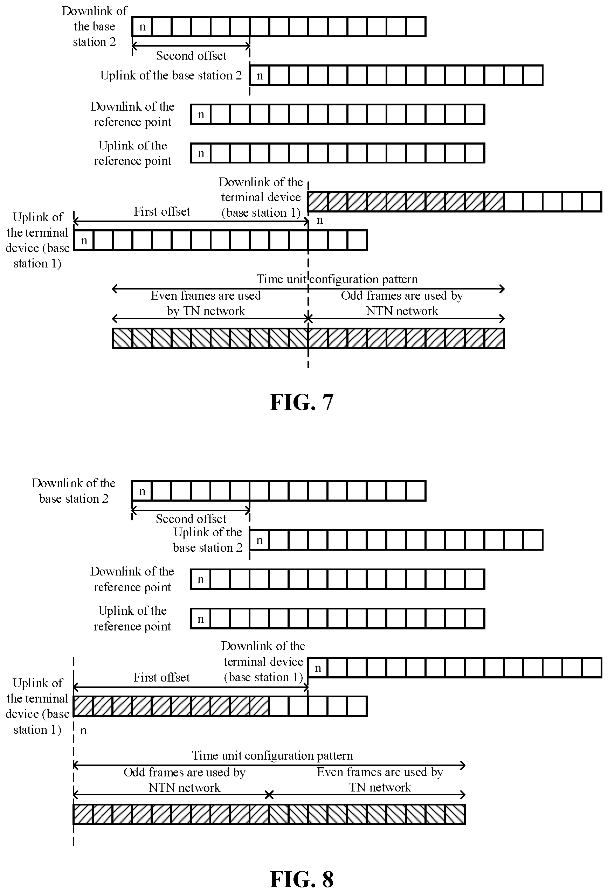

Exemplarily, the first information is used for determining at least one of: a sharing manner of the first spectrum resource, a communication transmission direction for sharing the first spectrum resource, a time unit configuration pattern, or a timing reference of the second communication network (for example, a timing reference of the NTN network). FIG. 7 gives a schematic diagram of a time unit configuration pattern. As shown in FIG. 7, the sharing manner of the first spectrum resource is the time division multiplexing, and the communication transmission direction for sharing the first spectrum resource is downlink. The time unit configuration pattern is used for configuring the TN network to use even frames on the first spectrum resource and/or configuring the NTN network to use odd frames on the first spectrum resource. The even frames or the odd frames are determined according to the timing reference of the NTN network (i.e., the time unit configuration pattern corresponds to the timing reference of the NTN network). Exemplarily, the timing reference of the NTN network is determined by a downlink time unit of a terminal device in the NTN network that may be a certain terminal device in the NTN network or a terminal device at a predefined location, for example, a downlink time unit of a virtual terminal device. Exemplarily, the location of the virtual terminal device may be the location of the base station 1. After receiving the first information, the base station 1 may determine, based on the timing reference of the NTN network and the timing reference of the TN network, the downlink time unit that may be used by the TN network on the first spectrum resource.

FIG. 8 gives another schematic diagram of a time unit configuration pattern. As shown in FIG. 8, the sharing manner of the first spectrum resource is the time division multiplexing, and the communication transmission direction for sharing the first spectrum resource is uplink. The time unit configuration pattern is used for configuring the TN network to use even frames on the first spectrum resource and/or configuring the NTN network to use odd frames on the first spectrum resource. The even frames or the odd frames are determined according to the timing reference of the NTN network (i.e., the time unit configuration pattern corresponds to the timing reference of the NTN network). Exemplarily, the timing reference of the NTN network is determined by an uplink time unit of a terminal device in the NTN network that may be a certain terminal device in the NTN network or a terminal device at a predefined location, for example, an uplink time unit of a virtual terminal device. Exemplarily, the location of the virtual terminal device may be the location of the base station 1. After receiving the first indication information, the base station 1 may determine, based on the timing reference of the NTN network and the timing reference of the TN network, the uplink time unit that may be used by the TN network on the first spectrum resource.

Exemplarily, the first information is used for determining at least one of: whether the first spectrum resource is able to be used, a sharing manner of the first spectrum resource, or a communication transmission direction for sharing the first spectrum resource. The third SSB set in the second information is used for determining SSBs received by the base station 1 that are in the NTN network. The QCL configuration information may be determined based on the third SSB set in the second information. For example, the SSBs transmitted in the NTN network are: an SSB0, an SSB1, an SSB2 and an SSB3, and the SSB that may be received by the base station 1 that are in the NTN network are the SSB2. Therefore, the base station 1 informs the base station 2 of this information i.e., the third SSB set includes the SSB2. After receiving the third SSB set, the base station 2 determines to share the first spectrum resource with the TN network; and therefore updates the SSBs transmitted in the NTN network to be the SSB0, SSB1 and the SSB3; and indicates, in the first information, that the base station 1 is able to use the first spectrum resource and the sharing manner of the first spectrum resource, for example, the space-domain multiplexing, and the communication transmission direction for sharing the first spectrum resource, for example, uplink or downlink. Alternatively, the base station 2 may determine not to share the first spectrum resource with the TN network, i.e., indicating, in the first information, that the base station 1 is unable to use the first spectrum resource.

Exemplarily, the first information is used for determining at least one of: whether the first spectrum resource is able to be used, or a communication transmission direction for sharing the first spectrum resource. The second location information in the second information is used for determining the location of the base station 1, and the QCL configuration information may be determined based on the second location information in the second information. For example, the base station 2 in the NTN network may determine, based on the location information of the base station 1, a beam direction that may cause interference to the communication of the base station 1. If the base station 2 determines to share the first spectrum resource with the TN network, the base station 2 may not perform the transmission in the beam direction that may cause interference to the communication of the base station 1, and indicate in the first information that the base station 1 is able to use the first spectrum resource and the communication transmission direction for sharing the first spectrum resource, for example, uplink or downlink. If the base station 2 determines not to share the first spectrum resource with the TN network, the base station 2 indicates, in the first information, that the base station 1 is unable to use the first spectrum resource.

The base station 1 receives the first information sent by the base station 2. The first information is used for determining whether the first spectrum resource is able to be used or a spectrum resource available for the base station 1 to perform the communication in the first spectrum resource. In a case that the first spectrum resource is able to be used, the base station 1 determines, based on the first information, the spectrum resource available for the base station 1 to perform the communication in the first spectrum resource, and perform the communication with the UE 1 using the spectrum resource available for the base station 2 to perform the communication in the first spectrum resource.

Through the aforementioned method, sharing the spectrum resource between the TN network and the NTN network is implemented, which avoids or reduces the interference of communication signal transmission between two or more networks sharing the spectrum resource, thereby improving the reliability of signal transmission.

In the aforementioned method embodiments, the technical solutions of the present disclosure are introduced and described only from the perspective of interaction between the first network device and the second network device. The aforementioned operations performed by the first network device may be individually implemented as a method for wireless communication on the first network device side, and the aforementioned operations performed by the second network device may be individually implemented as a method for wireless communication on the second network device side. In addition, the embodiments provided herein may be arbitrarily combined to form new embodiments, which are within the scope of protection of the present disclosure.

The following is embodiments of the device of the present disclosure, which is configured to perform the method embodiments of the present disclosure. For details not disclosed in the device embodiments of the present disclosure, reference can be made to the method embodiments of the present disclosure.

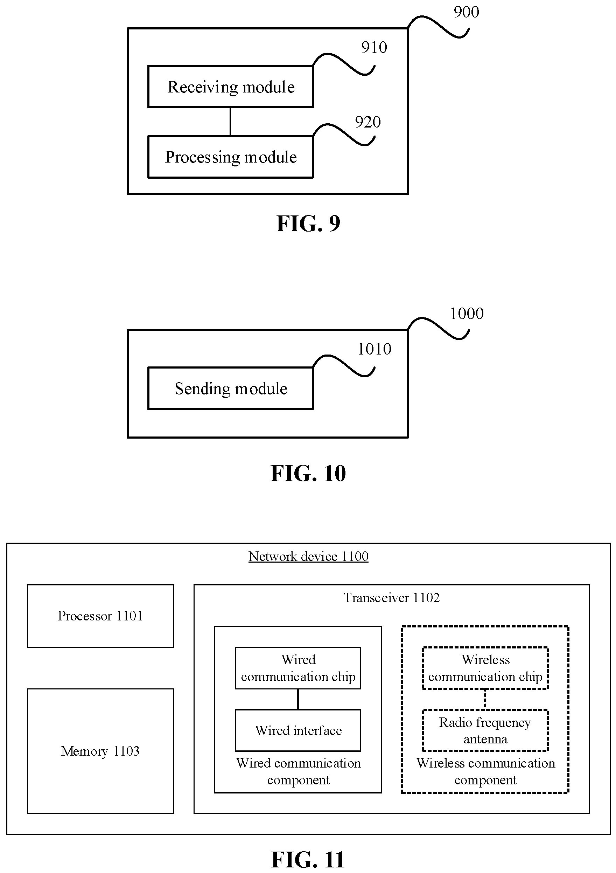

With reference to FIG. 9, a block diagram of a device for wireless communication according to an embodiment of the present disclosure is shown. The device has functions of implementing the above method embodiments, and the functions can be implemented by hardware or by execution of corresponding software by hardware. The device may be the first network device described in the foregoing, or may be arranged in the first network device. As illustrated in FIG. 9, the device 900 includes a receiving module 910 and a processing module 920.

The receiving module 910 is configured to receive first information sent by a second network device. The first information is used for determining whether a first network device is allowed to perform communication using a first spectrum resource. The first spectrum resource is a spectrum resource used by the second network device for communication. The first network device is a network device in a first communication network. The second network device is a network device in a second communication network. The first communication network and the second communication network are different communication networks.

The processing module 920 is configured to: in a case of determining, based on the first information, that the first network device is allowed to perform communication using the first spectrum resource, perform communication using the first spectrum resource in the first communication network.

In some embodiments, the first spectrum resource is a shared spectrum resource, the shared spectrum resource is a spectrum resource shared by the second network device and the first network device, or the shared spectrum resource is a spectrum resource shared by the second communication network and the first communication network.

In some embodiments, the first spectrum resource is a FDD spectrum or the first spectrum resource is a TDD spectrum

In some embodiments, the first spectrum resource is used for downlink communication, and/or, the first spectrum resource is used for uplink communication.

In some embodiments, the first information is used for determining at least one of:
the first network device is allowed to performing communication using the first spectrum resource;
the first network device is disallowed to perform communication using the first spectrum resource;
a sharing manner of the first spectrum resource, the sharing manner including at least one of: time division multiplexing, frequency division multiplexing, or space division multiplexing;
a communication transmission direction for sharing the first spectrum resource, the communication transmission direction including at least one of: uplink, downlink, flexible, or sidelink;
time-domain resource information for allowing the first network device to perform communication using the first spectrum resource;
frequency-domain resource information for allowing the first network device to perform communication using the first spectrum resource;
space-domain resource information for allowing the first network device to perform communication using the first spectrum resource;
a timing reference of the first communication network; or
a timing reference of the second communication network.

In some embodiments, the first information is used for determining at least one of: a time unit configuration pattern, frequency-domain unit configuration information or QCL configuration information.

The time unit configuration pattern is used for determining time-domain resource information for allowing the first network device to perform communication using the first spectrum resource, and/or time-domain resource information for allowing the second network device to perform communication using the first spectrum resource;
The frequency-domain unit configuration information is used for determining frequency-domain resource information for allowing the first network device to perform communication using the first spectrum resource, and/or frequency-domain resource information for allowing the second network device to perform communication using the first spectrum resource; or
The QCL configuration information is used for determining space-domain resource information for allowing the first network device to perform communication using the first spectrum resource, and/or space-domain resource information for allowing the second network device to perform communication using the first spectrum resource.

In some embodiments, the time unit configuration pattern includes a first uplink-downlink configuration pattern and/or a second uplink-downlink configuration pattern. The first uplink-downlink configuration pattern is an uplink-downlink configuration pattern of the first communication network, the second uplink-downlink configuration pattern is an uplink-downlink configuration pattern of the second communication network, and the uplink-downlink configuration pattern configures a communication transmission direction of each time unit on the first spectrum resource as one of uplink, downlink, or flexible.

In some embodiments, in a case that a sharing manner of the first spectrum resource includes time division multiplexing,
if a first time unit is configured as a time unit for uplink communication in the second uplink-downlink configuration pattern, the first time unit is unable to be configured as a time unit for uplink communication in the first uplink-downlink configuration pattern;
   and/or,
if a second time unit is configured as a time unit for downlink communication in the second uplink-downlink configuration pattern, the second time unit is unable to be configured as a time unit for downlink communication in the first uplink-downlink configuration pattern.

In some embodiments, the frequency-domain unit configuration information is used for determining a first frequency-domain bandwidth part and/or a second frequency-domain bandwidth part. The first frequency-domain bandwidth part is a frequency-domain unit used by the first communication network, and the second frequency-domain bandwidth part is a frequency-domain unit used by the second communication network.

In some embodiments, in a case that a sharing manner of the first spectrum resource includes frequency division multiplexing, the first frequency-domain bandwidth part and the second frequency-domain bandwidth part do not overlap in a frequency domain.

In some embodiments, the QCL configuration information is used for determining a first beam direction and/or a second beam direction, where the first beam direction is a beam direction used by the first communication network and the second beam direction is a beam direction used by the second communication network.

In some embodiments, the QCL configuration information is used for determining at least one of: a first SSB set, a second SSB set, or a third SSB set, where the first SSB set includes a part or all of SSBs transmitted in the first communication network, the second SSB set includes a part or all of SSBs transmitted in the second communication network, and the third SSB set includes a part or all of SSBs received in the first communication network that are transmitted in the second communication network.

In some embodiments, the device 900 further includes a sending module (not shown).

The sending module is configured to send second information to the second network device. The second information is used for determining at least one of:
a request to the second network device for using the first spectrum resource;
a timing reference of the first communication network; or
a timing reference of the second communication network.

In some embodiments, the first communication network is the NTN and the second communication network is the TN.

In some embodiments, the first information is used for determining at least one of: first location information or a second SSB set.

The first location information is location information of the second network device.

The second SSB set includes a part or all of SSBs transmitted in the second communication network.

In some embodiments, the second information sent to the second network device is used for determining at least one of: a first offset, a second offset, first ephemeris information, a first SSB set or a third SSB set.

The first offset is determined based on a round trip delay of a communication link between a first reference point in the first communication network and a first terminal device in the first communication network.

The is determined based on a round trip delay of a communication link between the first reference point in the first communication network and the first network device.

The first ephemeris is ephemeris information in the first communication network.

The first SSB set includes part or all of SSBs transmitted in the first communication network.

The third SSB set includes part or all of SSBs received in the first communication network that are transmitted in the second communication network.

In some embodiments, the first communication network is the TN and the second communication network is the NTN.

In some embodiments, the first information is used for determining at least one of: a third offset, a fourth offset, second ephemeris information or a second SSB set.

The third offset is determined based on a round trip delay of a communication link between a second reference point in the second communication network and a second terminal device in the second communication network.

The fourth offset is determined based on a round trip delay of a communication link between the second reference point in the second communication network and the second network device.

The second ephemeris information is ephemeris information in the second communication network.

The second SSB set includes part or all of SSBs transmitted in the second communication network.

In some embodiments, the second information sent to the second network device is used for determining at least one of: second location information, a first SSB set or a third SSB set.

The second location information is location information of the first network device.

The first SSB set includes a part or all of SSBs transmitted in the first communication network.

The third SSB set includes a part or all of SSBs received in the first communication network that are transmitted in the second communication network.

In some embodiments, the SSBs received in the first communication network that are transmitted in the second communication network include:
SSBs received by the first network device that are transmitted in the second communication network; and/or
SSBs received by the terminal device in the first communication network that are transmitted in the second communication network.

According to the technical solutions provided by the embodiment of the present disclosure, it is determined, through the first information sent by the second network device, whether the first network device is able to perform the communication using the first spectrum resource, which enables the first network device to share the spectrum resource with the second network device, the interference of communication signal transmission between two or more networks sharing the spectrum resource can be effectively avoided or reduced, and the reliability of the signal transmission is improved.

With reference to FIG. 10, a block diagram of a device for wireless communication according to another embodiment of the present disclosure is shown. The device has functions of implementing the above method embodiments, and the functions can be implemented by hardware or by execution of corresponding software by hardware. The device may be the second network device described in the foregoing, or may be arranged in the second network device. As illustrated in FIG. 10, the device 1000 includes a sending module 1010.

The sending module 1010 is configured to send first information to a first network device. The first information is used for determining whether the first network device is allowed to perform communication using a first spectrum resource. The first spectrum resource is a spectrum resource used by a second network device for communication. The first network device is a network device in a first communication network. The second network device is a network device in a second communication network. The first communication network and the second communication network are different communication networks.

In some embodiments, the first spectrum resource is a shared spectrum resource, the shared spectrum resource is a spectrum resource shared by the second network device and the first network device, or the shared spectrum resource is a spectrum resource shared by the second communication network and the first communication network.

In some embodiments, the first spectrum resource is a FDD spectrum or the first spectrum resource is a TDD spectrum

In some embodiments, the first spectrum resource is used for downlink communication, and/or, the first spectrum resource is used for uplink communication.

In some embodiments, the first information is used for determining at least one of:
the first network device is allowed to performing communication using the first spectrum resource;
the first network device is disallowed to perform communication using the first spectrum resource;
a sharing manner of the first spectrum resource, the sharing manner including at least one of: time division multiplexing, frequency division multiplexing, or space division multiplexing;
a communication transmission direction for sharing the first spectrum resource, the communication transmission direction including at least one of: uplink, downlink, flexible, or sidelink;
time-domain resource information for allowing the first network device to perform communication using the first spectrum resource;
frequency-domain resource information for allowing the first network device to perform communication using the first spectrum resource;
space-domain resource information for allowing the first network device to perform communication using the first spectrum resource;
a timing reference of the first communication network; or
a timing reference of the second communication network.

In some embodiments, the first information is used for determining at least one of: a time unit configuration pattern, frequency-domain unit configuration information, or QCL configuration information.

The time unit configuration pattern is used for determining time-domain resource information for allowing the first network device to perform communication using the first spectrum resource, and/or time-domain resource information for allowing the second network device to perform communication using the first spectrum resource;
The frequency-domain unit configuration information is used for determining frequency-domain resource information for allowing the first network device to perform communication using the first spectrum resource, and/or frequency-domain resource information for allowing the second network device to perform communication using the first spectrum resource; or
The QCL configuration information is used for determining space-domain resource information for allowing the first network device to perform communication using the first spectrum resource, and/or space-domain resource information for allowing the second network device to perform communication using the first spectrum resource.

In some embodiments, the time unit configuration pattern includes a first uplink-downlink configuration pattern and/or a second uplink-downlink configuration pattern, where the first uplink-downlink configuration pattern is an uplink-downlink configuration pattern of the first communication network, the second uplink-downlink configuration pattern is an uplink-downlink configuration pattern of the second communication network, and the uplink-downlink configuration pattern configures a communication transmission direction of each time unit on the first spectrum resource as one of uplink, downlink, or flexible.

In some embodiments, in a case that a sharing manner of the first spectrum resource includes time division multiplexing,
if a first time unit is configured as a time unit for uplink communication in the second uplink-downlink configuration pattern, the first time unit is unable to be configured as a time unit for uplink communication in the first uplink-downlink configuration pattern;
   and/or,
if a second time unit is configured as a time unit for downlink communication in the second uplink-downlink configuration pattern, the second time unit is unable to be configured as a time unit for downlink communication in the first uplink-downlink configuration pattern.

In some embodiments, the frequency-domain unit configuration information is used for determining a first frequency-domain bandwidth part and/or a second frequency-domain bandwidth part, where the first frequency-domain bandwidth part is a frequency-domain unit used by the first communication network, and the second frequency-domain bandwidth part is a frequency-domain unit used by the second communication network.

In some embodiments, in a case that a sharing manner of the first spectrum resource includes frequency division multiplexing, the first frequency-domain bandwidth part and the second frequency-domain bandwidth part do not overlap in a frequency domain.

In some embodiments, the QCL configuration information is used for determining a first beam direction and/or a second beam direction, where the first beam direction is a beam direction used by the first communication network and the second beam direction is a beam direction used by the second communication network.

In some embodiments, the QCL configuration information is used for determining at least one of: a first Synchronization Signal/Physical Broadcast Channel (PBCH) Block (SSB) set, a second SSB set, or a third SSB set, where the first SSB set includes part or all of SSBs transmitted in the first communication network, the second SSB set includes part or all of SSBs transmitted in the second communication network, and the third SSB set includes part or all of SSBs received in the first communication network that are transmitted in the second communication network.

In some embodiments, the device 1000 further includes a receiving module (not shown).

The receiving module is configured to receive second information sent by the first network device, and the second information is used for determining at least one of:
a request to the second network device for using the first spectrum resource;
a timing reference of the first communication network; or
a timing reference of the second communication network.

In some embodiments, the first communication network is the NTN and the second communication network is the TN.

In some embodiments, the first information is used for determining at least one of: first location information or a second SSB set.

The first location information is location information of the second network device.

The second SSB set includes a part or all of SSBs transmitted in the second communication network.

In some embodiments, the second information is used for determining at least one of: a first offset, a second offset, first ephemeris information, a first SSB set or a third SSB set.

The first offset is determined based on a round trip delay of a communication link between a first reference point in the first communication network and a first terminal device in the first communication network.

The second offset is determined based on a round trip delay of a communication link between the first reference point in the first communication network and the first network device;
The first ephemeris is ephemeris information in the first communication network;
The first SSB set includes a part or all of SSBs transmitted in the first communication network.

The third SSB set includes part or all of SSBs received in the first communication network that are transmitted in the second communication network.

In some embodiments, the first communication network is the TN and the second communication network is the NTN.

In some embodiments, the first information is used for determining at least one of: a third offset, a fourth offset, second ephemeris information or a second SSB set.

The third offset is determined based on a round trip delay of a communication link between a second reference point in the second communication network and a second terminal device in the second communication network.

The fourth offset is determined based on a round trip delay of a communication link between the second reference point in the second communication network and the second network device.

The second ephemeris information is ephemeris information in the second communication network.

The second SSB set includes part or all of SSBs transmitted in the second communication network.

In some embodiments, the second information sent to the second network device is used for determining at least one of: second location information, a first SSB set or a third SSB set.

The second location information is location information of the first network device.

The first SSB set includes part or all of SSBs transmitted in the first communication network.

The third SSB set includes a part or all of SSBs received in the first communication network that are transmitted in the second communication network.

In some embodiments, the SSBs received in the first communication network that are transmitted in the second communication network include:
SSBs received by the first network device that are transmitted in the second communication network; and/or
SSBs received by the terminal device in the first communication network that are transmitted in the second communication network.

According to the technical solutions provided by the embodiments of the present disclosure, it is determined, through the first information sent by the second network device, whether the first network device is able to perform the communication using the first spectrum resource, which enables the first network device to share the spectrum resource with the second network device, the interference of communication signal transmission between two or more networks sharing the spectrum resource can be effectively avoided or reduced, and the reliability of the signal transmission is improved.

It is to be noted that, when the device provided by the embodiments implements its function, the division of the functional modules described above is only used an example. In practical application, the above functions can be implemented by assigning the functions to different functional modules according to actual requirements. That is to say, the content structure of the device can be divided into different functional modules to complete all or part of the functions described above.

With regard to the device in the above embodiments, the specific manner in which the various modules perform the operations has been described in detail in the embodiments relating to the methods and would not be explained in detail herein.

With reference to FIG. 11, a schematic structural diagram of a network device according to an embodiment of the present disclosure is shown. The network device 1100 may include a processor 1101, a transceiver 1102, and a memory 1103. The transceiver 1102 is configured to implement the function of receiving and/or sending, for example, the function of the sending module 1010 or the function of the receiving module 910. The processor 1101 is configured to implement other functions other than receiving and/or sending, or to control the receiving and/or sending, for example, configured to implement the function of the aforementioned processing module 920.

The processor 1101 includes one or more processing cores and performs various functional applications and information processing by running software programs and modules. The processor 1101 is configured to perform other operations other than the operations of sending and receiving performed by the first network device/second network device in the aforementioned method embodiments.

The transceiver 1102 may include a receiver and a transmitter. For example, the receiver and the transmitter may be implemented as the same wireless communication component that may include a wireless communication chip and a radio frequency antenna. The transceiver 1102 is configured to perform the operations of sending and receiving performed by the first network device/second network device in the aforementioned method embodiments.

The memory 1103 may be connected to the processor 1101 and the transceiver 1102.

The memory 1103 may be configured to store a computer program and the processor 1101 is configured to execute the computer program to implement the various operations in the method embodiments at the first network device side/second network device side.

Furthermore, the memory may be implemented by any type of volatile or non-volatile storage devices or a combination thereof. The volatile or non-volatile storage devices may include, but are not limited to: a magnetic disk or an optical disk, an Electrically Erasable Programmable Read-Only Memory (EEPROM), an Erasable Programmable Read-Only Memory (EPROM), a static Random Access Memory (RAM), a ROM, a magnetic memory, a flash memory or a programmable ROM.

In some embodiments, in the case where the network device 1100 is the first network device, the receiving module 1102 is configured to receive first information sent by a second network device. The first information is used for determining whether a first network device is allowed to perform communication using a first spectrum resource. The first spectrum resource is a spectrum resource used by the second network device for communication. The first network device is a network device in a first communication network. The second network device is a network device in a second communication network. The first communication network and the second communication network are different communication networks. The processor1101 is configured to: in a case of determining, based on the first information, that the first network device is allowed to perform communication using the first spectrum resource, perform communication using the first spectrum resource in the first communication network.

In some embodiments, in the case where the network device 1100 is the second network device, the transceiver 1102 is configured to send first information to a first network device. The first information is used for determining whether the first network device is allowed to perform communication using a first spectrum resource. The first spectrum resource is a spectrum resource used by a second network device for communication. The first network device is a network device in a first communication network. The second network device is a network device in a second communication network. The first communication network and the second communication network are different communication networks.

For details not described in detail in the present embodiments, reference is made to the description in the above embodiments and would not be repeated herein.

The embodiments of the disclosure also provide a computer-readable storage medium having stored thereon a computer program that, when executed by a processor, implements the method for wireless communication at the first network device side or the second network device side. In some embodiments, the computer-readable storage medium may include a ROM, a RAM, a Solid State Drive (SSD), an optical disk, and the like. The RAM includes a Resistance Random Access Memory (ReRAM) and a Dynamic Random Access Memory (DRAM).

The embodiments of the disclosure also provide a chip including a programmable logic circuit or program instruction for implementing, when the chip is running, the method for wireless communication at the first network device side or the second network device side.

The embodiments of the present disclosure also provides a computer program product including computer instructions stored in a computer-readable storage medium, where a processor reads and executes the computer instructions from the computer-readable storage medium to implement the method for wireless communication at the first network device side or the second network device side.

It is to be understood that the "indication" mentioned in the embodiments of the present disclosure may be a direct indication, may be an indirect indication, or may be indicative of an association. For example, A indicates B, which may mean that A directly indicates B, for example, B may be obtained through A; it may also mean that A indirectly indicates B, for example, A indicates C, and B may be obtained by C; and it may also indicate that there is an association between A and B.

In the description of the embodiments of the present disclosure, the term "correspond" may mean that there is a direct correspondence or an indirect correspondence between the two, may also mean that there is an association relationship between the two, and may also be a relationship between indication and being indicated, configuration and being configured, etc.

In some embodiments of the present disclosure, the term "predefined" may be achieved by pre-storing corresponding codes, tables or other means used for indicating relevant information in devices (e.g., including the first network device or the second network device), and the specific implementation thereof is not limited in the present disclosure. For example, predefined may refer to what is defined in the protocol.

In some embodiments of the present disclosure, the "protocol" may be a standard protocol in the communication field. For example, the protocol may include an LTE protocol, an NR protocol, and related protocols applied in future communication systems, which are not limited in the present disclosure.

The term "multiple" in the present disclosure may be two or more. The term "and/or" is an association relationship describing associated objects and represents that three relationships may exist. For example, A and/or B may represent three conditions: i.e., independent existence of A, existence of both A and B and independent existence of B. The character "/" generally indicates that the relationship between the related objects is "or".

The "greater than or equal to" mentioned in the present disclosure may mean greater than or equal to or greater than, and "less than or equal to" may mean less than or equal to or less than.

In addition, the numbers of the operations described in the present disclosure only represents a possible sequence of implementation between the operations by example, and in some other embodiments, the above-mentioned operations may also be performed not in the sequence. For example, two differently numbered operations are performed simultaneously, or two differently numbered operations are performed in a sequence reverse to the illustration, which is not limited in the embodiments of the present disclosure.

Those skilled in the art will appreciate that, in one or more of the above examples, the functions described in the embodiments of the present disclosure may be implemented in hardware, software, firmware or any combination thereof. When the functions are implemented in software, these functions may be stored in a computer-readable medium or transmitted as one or more instructions or codes on the computer-readable medium. The computer-readable medium includes a computer storage medium and a communication medium. The communication medium includes any medium that facilitates the transfer of computer programs from one place to another place. The storage medium may be any available medium accessible to a general-purpose or special-purpose computer.

The above descriptions are only exemplary embodiments of the present disclosure and are not intended to limit the present disclosure. Any modification, equivalent replacement, improvement or the like made within the spirit and principles of the present disclosure shall be included in the scope of protection of the present disclosure.

## Claims

1. A method for wireless communication, performed by a first network device, the method comprising:
receiving first information sent by a second network device, the first information being used for determining whether the first network device is allowed to perform communication using a first spectrum resource, wherein the first spectrum resource is a spectrum resource used by the second network device for communication, the first network device is a network device in a first communication network, the second network device is a network device in a second communication network, and the first communication network and the second communication network are different communication networks; and
in a case of determining, based on the first information, that the first network device is allowed to perform communication using the first spectrum resource, performing communication using the first spectrum resource in the first communication network.

2. The method of claim 1, wherein the first spectrum resource is a shared spectrum resource, the shared spectrum resource being a spectrum resource shared by the second network device and the first network device, or the shared spectrum resource being a spectrum resource shared by the second communication network and the first communication network.

3. The method of claim 1 or 2, wherein the first spectrum resource is a Frequency Division Duplexing (FDD) spectrum, or the first spectrum resource is a Time-Division Duplex (TDD) spectrum.

4. The method of any one of claims 1 to 3, wherein the first spectrum resource is used for downlink communication, and/or, the first spectrum resource is used for uplink communication.

5. The method of any one of claims 1 to 4, wherein the first information is used for determining at least one of:
the first network device is allowed to performing communication using the first spectrum resource;
the first network device is disallowed to perform communication using the first spectrum resource;
a sharing manner of the first spectrum resource, the sharing manner comprising at least one of: time division multiplexing, frequency division multiplexing, or space division multiplexing;
a communication transmission direction for sharing the first spectrum resource, the communication transmission direction comprising at least one of: uplink, downlink, flexible, or sidelink;
time-domain resource information for allowing the first network device to perform communication using the first spectrum resource;
frequency-domain resource information for allowing the first network device to perform communication using the first spectrum resource;
space-domain resource information for allowing the first network device to perform communication using the first spectrum resource;
a timing reference of the first communication network; or
a timing reference of the second communication network.

6. The method of any one of claims 1 to 5, wherein the first information is used for determining at least one of:
a time unit configuration pattern, used for determining time-domain resource information for allowing the first network device to perform communication using the first spectrum resource, and/or time-domain resource information for allowing the second network device to perform communication using the first spectrum resource;
frequency-domain unit configuration information, used for determining frequency-domain resource information for allowing the first network device to perform communication using the first spectrum resource, and/or frequency-domain resource information for allowing the second network device to perform communication using the first spectrum resource; or
Quasi Co-Location (QCL) configuration information, used for determining space-domain resource information for allowing the first network device to perform communication using the first spectrum resource, and/or space-domain resource information for allowing the second network device to perform communication using the first spectrum resource.

7. The method of claim 6, wherein the time unit configuration pattern comprises a first uplink-downlink configuration pattern and/or a second uplink-downlink configuration pattern, wherein the first uplink-downlink configuration pattern is an uplink-downlink configuration pattern of the first communication network, the second uplink-downlink configuration pattern is an uplink-downlink configuration pattern of the second communication network, and the uplink-downlink configuration pattern configures a communication transmission direction of each time unit on the first spectrum resource as one of uplink, downlink, or flexible.

8. The method of claim 7, wherein in a case that a sharing manner of the first spectrum resource comprises time division multiplexing,
if a first time unit is configured as a time unit for uplink communication in the second uplink-downlink configuration pattern, the first time unit is unable to be configured as a time unit for uplink communication in the first uplink-downlink configuration pattern;
and/or,
if a second time unit is configured as a time unit for downlink communication in the second uplink-downlink configuration pattern, the second time unit is unable to be configured as a time unit for downlink communication in the first uplink-downlink configuration pattern.

9. The method of any one of claims 6 to 8, wherein the frequency-domain unit configuration information is used for determining a first frequency-domain bandwidth part and/or a second frequency-domain bandwidth part, wherein the first frequency-domain bandwidth part is a frequency-domain unit used by the first communication network, and the second frequency-domain bandwidth part is a frequency-domain unit used by the second communication network.

10. The method of claim 9, wherein in a case that a sharing manner of the first spectrum resource comprises frequency division multiplexing, the first frequency-domain bandwidth part and the second frequency-domain bandwidth part do not overlap in a frequency domain.

11. The method of any one of claims 6 to 10, wherein the QCL configuration information is used for determining a first beam direction and/or a second beam direction, wherein the first beam direction is a beam direction used by the first communication network and the second beam direction is a beam direction used by the second communication network.

12. The method of claim 11, wherein the QCL configuration information is used for determining at least one of: a first Synchronization Signal/Physical Broadcast Channel (PBCH) Block (SSB) set, a second SSB set, or a third SSB set, wherein the first SSB set comprises part or all of SSBs transmitted in the first communication network, the second SSB set comprises part or all of SSBs transmitted in the second communication network, and the third SSB set comprises part or all of SSBs received in the first communication network that are transmitted in the second communication network.

13. The method of any one of claims 1 to 12, further comprising:
sending second information to the second network device, the second information being used for determining at least one of:
a request to the second network device for using the first spectrum resource;
a timing reference of the first communication network; or
a timing reference of the second communication network.

14. The method of any one of claims 1 to 13, wherein the first communication network is a Non Terrestrial Network (NTN) and the second communication network is a Terrestrial Network (TN).

15. The method of claim 14, wherein the first information is used for determining at least one of:
first location information, the first location information is location information of the second network device; or
a second Synchronization Signal/Physical Broadcast Channel (PBCH) Block (SSB) set, the second SSB set comprising part or all of SSBs transmitted in the second communication network.

16. The method of claim 14 or 15, wherein the second information sent to the second network device is used for determining at least one of:
a first offset, the first offset being determined based on a round trip delay of a communication link between a first reference point in the first communication network and a first terminal device in the first communication network;
a second offset, the second offset being determined based on a round trip delay of a communication link between the first reference point in the first communication network and the first network device;
first ephemeris information, the first ephemeris being ephemeris information in the first communication network;
a first Synchronization Signal/Physical Broadcast Channel (PBCH) Block (SSB) set, the first SSB set comprising part or all of SSBs transmitted in the first communication network; or
a third SSB set, the third SSB set comprising part or all of SSBs received in the first communication network that are transmitted in the second communication network.

17. The method of any one of claims 1 to 13, wherein the first communication network is a Terrestrial Network (TN) and the second communication network is a Non Terrestrial Network (NTN).

18. The method of claim 17, wherein the first information is used for determining at least one of:
a third offset, the third offset being determined based on a round trip delay of a communication link between a second reference point in the second communication network and a second terminal device in the second communication network;
a fourth offset, the fourth offset being determined based on a round trip delay of a communication link between the second reference point in the second communication network and the second network device;
second ephemeris information, the second ephemeris information is ephemeris information in the second communication network; or
a second Synchronization Signal/Physical Broadcast Channel (PBCH) Block (SSB) set, the second SSB set comprising part or all of SSBs transmitted in the second communication network.

19. The method of claim 17 or 18, wherein the second information sent to the second network device is used for determining at least one of:
second location information, the second location information is location information of the first network device;
a first Synchronization Signal/Physical Broadcast Channel (PBCH) Block (SSB) set, the first SSB set comprising part or all of SSBs transmitted in the first communication network; or
a third SSB set, the third SSB set comprising part or all of SSBs received in the first communication network that are transmitted in the second communication network.

20. The method of claim 16 or 19, wherein the SSBs received in the first communication network that are transmitted in the second communication network comprise:
SSBs received by the first network device that are transmitted in the second communication network; and/or
SSBs received by the terminal device in the first communication network that are transmitted in the second communication network.

21. A method for wireless communication, performed by a second network device, the method comprising:
sending first information to a first network device, the first information being used for determining whether the first network device is allowed to perform communication using a first spectrum resource, wherein the first spectrum resource is a spectrum resource used by the second network device for communication, the first network device is a network device in a first communication network, the second network device is a network device in a second communication network, and the first communication network and the second communication network are different communication networks.

22. The method of claim 21, wherein the first spectrum resource is a shared spectrum resource, the shared spectrum resource being a spectrum resource shared by the second network device and the first network device, or the shared spectrum resource being a spectrum resource shared by the second communication network and the first communication network.

23. The method of claim 21 or 22, wherein the first spectrum resource is a Frequency Division Duplexing (FDD) spectrum, or the first spectrum resource is a Time-Division Duplex (TDD) spectrum.

24. The method of any one of claims 21 to 23, wherein the first spectrum resource is used for downlink communication, and/or, the first spectrum resource is used for uplink communication.

25. The method of any one of claims 21 to 24, wherein the first information is used for determining at least one of:
the first network device is allowed to performing communication using the first spectrum resource;
the first network device is disallowed to perform communication using the first spectrum resource;
a sharing manner of the first spectrum resource, the sharing manner comprising at least one of: time division multiplexing, frequency division multiplexing, or space division multiplexing;
a communication transmission direction for sharing the first spectrum resource, the communication transmission direction comprising at least one of: uplink, downlink, flexible, or sidelink;
time-domain resource information for allowing the first network device to perform communication using the first spectrum resource;
frequency-domain resource information for allowing the first network device to perform communication using the first spectrum resource;
space-domain resource information for allowing the first network device to perform communication using the first spectrum resource;
a timing reference of the first communication network; or
a timing reference of the second communication network.

26. The method of any one of claims 21 to 25, wherein the first information is used for determining at least one of:
a time unit configuration pattern, used for determining time-domain resource information for allowing the first network device to perform communication using the first spectrum resource, and/or time-domain resource information for allowing the second network device to perform communication using the first spectrum resource;
frequency-domain unit configuration information, used for determining frequency-domain resource information for allowing the first network device to perform communication using the first spectrum resource, and/or frequency-domain resource information for allowing the second network device to perform communication using the first spectrum resource; or
Quasi Co-Location (QCL) configuration information, used for determining space-domain resource information for allowing the first network device to perform communication using the first spectrum resource, and/or space-domain resource information for allowing the second network device to perform communication using the first spectrum resource.

27. The method of claim 26, wherein the time unit configuration pattern comprises a first uplink-downlink configuration pattern and/or a second uplink-downlink configuration pattern, wherein the first uplink-downlink configuration pattern is an uplink-downlink configuration pattern of the first communication network, the second uplink-downlink configuration pattern is an uplink-downlink configuration pattern of the second communication network, and the uplink-downlink configuration pattern configures a communication transmission direction of each time unit on the first spectrum resource as one of uplink, downlink, or flexible.

28. The method of claim 27, wherein in a case that a sharing manner of the first spectrum resource comprises time division multiplexing,
if a first time unit is configured as a time unit for uplink communication in the second uplink-downlink configuration pattern, the first time unit is unable to be configured as a time unit for uplink communication in the first uplink-downlink configuration pattern;
and/or,
if a second time unit is configured as a time unit for downlink communication in the second uplink-downlink configuration pattern, the second time unit is unable to be configured as a time unit for downlink communication in the first uplink-downlink configuration pattern.

29. The method of any one of claims 26 to 28, wherein the frequency-domain unit configuration information is used for determining a first frequency-domain bandwidth part and/or a second frequency-domain bandwidth part, wherein the first frequency-domain bandwidth part is a frequency-domain unit used by the first communication network, and the second frequency-domain bandwidth part is a frequency-domain unit used by the second communication network.

30. The method of claim 29, wherein in a case that a sharing manner of the first spectrum resource comprises frequency division multiplexing, the first frequency-domain bandwidth part and the second frequency-domain bandwidth part do not overlap in a frequency domain.

31. The method of any one of claims 26 to 30, wherein the QCL configuration information is used for determining a first beam direction and/or a second beam direction, wherein the first beam direction is a beam direction used by the first communication network and the second beam direction is a beam direction used by the second communication network.

32. The method of claim 31, wherein the QCL configuration information is used for determining at least one of: a first Synchronization Signal/Physical Broadcast Channel (PBCH) Block (SSB) set, a second SSB set, or a third SSB set, wherein the first SSB set comprises part or all of SSBs transmitted in the first communication network, the second SSB set comprises part or all of SSBs transmitted in the second communication network, and the third SSB set comprises part or all of SSBs received in the first communication network that are transmitted in the second communication network.

33. The method of any one of claims 21 to 32, further comprising:
receiving second information sent by the first network device, the second information being used for determining at least one of:
a request to the second network device for using the first spectrum resource;
a timing reference of the first communication network; or
a timing reference of the second communication network.

34. The method of any one of claims 21 to 33, wherein the first communication network is a Non Terrestrial Network (NTN) and the second communication network is a Terrestrial Network (TN).

35. The method of claim 34, wherein the first information is used for determining at least one of:
first location information, the first location information is location information of the second network device; or
a second Synchronization Signal/Physical Broadcast Channel (PBCH) Block (SSB) set, the second SSB set comprising part or all of SSBs transmitted in the second communication network.

36. The method of claim 34 or 35, wherein the second information is used for determining at least one of:
a first offset, the first offset being determined based on a round trip delay of a communication link between a first reference point in the first communication network and a first terminal device in the first communication network;
a second offset, the second offset being determined based on a round trip delay of a communication link between the first reference point in the first communication network and the first network device;
first ephemeris information, the first ephemeris is ephemeris information in the first communication network;
a first Synchronization Signal/Physical Broadcast Channel (PBCH) Block (SSB) set, the first SSB set comprising part or all of SSBs transmitted in the first communication network; or
a third SSB set, the third SSB set comprising part or all of SSBs received in the first communication network that are transmitted in the second communication network.

37. The method of any one of claims 21 to 33, wherein the first communication network is a Terrestrial Network (TN) and the second communication network is a Non Terrestrial Network (NTN).

38. The method of claim 37, wherein the first information is used for determining at least one of:
a third offset, the third offset being determined based on a round trip delay of a communication link between a second reference point in the second communication network and a second terminal device in the second communication network;
a fourth offset, the fourth offset being determined based on a round trip delay of a communication link between the second reference point in the second communication network and the second network device;
second ephemeris information, the second ephemeris information is ephemeris information in the second communication network; or
a second Synchronization Signal/Physical Broadcast Channel (PBCH) Block (SSB) set, the second SSB set comprising part or all of SSBs transmitted in the second communication network.

39. The method of claim 37 or 38, wherein the second information sent to the second network device is used for determining at least one of:
second location information, the second location information is location information of the first network device;
a first Synchronization Signal/Physical Broadcast Channel (PBCH) Block (SSB) set, the first SSB set comprising part or all of SSBs transmitted in the first communication network; or
a third SSB set, the third SSB set comprising part or all of SSBs received in the first communication network that are transmitted in the second communication network.

40. The method of claim 36 or 39, wherein the SSBs received in the first communication network that are transmitted in the second communication network comprise:
SSBs received by the first network device that are transmitted in the second communication network; and/or
SSBs received by the terminal device in the first communication network that are transmitted in the second communication network.

41. A device for wireless communication, comprising:
a receiving module, configured to receive first information sent by a second network device, the first information being used for determining whether a first network device is allowed to perform communication using a first spectrum resource, wherein the first spectrum resource is a spectrum resource used by the second network device for communication, the first network device is a network device in a first communication network, the second network device is a network device in a second communication network, and the first communication network and the second communication network are different communication networks; and
a processing module configured to: in a case of determining, based on the first information, that the first network device is allowed to perform communication using the first spectrum resource, perform communication using the first spectrum resource in the first communication network.

42. The device of claim 41, wherein the first spectrum resource is a shared spectrum resource, the shared spectrum resource being a spectrum resource shared by the second network device and the first network device, or the shared spectrum resource being a spectrum resource shared by the second communication network and the first communication network.

43. The device of claim 41 or 42, wherein the first spectrum resource is a Frequency Division Duplexing (FDD) spectrum, or the first spectrum resource is a Time-Division Duplex (TDD) spectrum.

44. The device of any one of claims 41 to 43, wherein the first spectrum resource is used for downlink communication, and/or, the first spectrum resource is used for uplink communication.

45. The device of any one of claims 41 to 44, wherein the first information is used for determining at least one of:
the first network device is allowed to performing communication using the first spectrum resource;
the first network device is disallowed to perform communication using the first spectrum resource;
a sharing manner of the first spectrum resource, the sharing manner comprising at least one of: time division multiplexing, frequency division multiplexing, or space division multiplexing;
a communication transmission direction for sharing the first spectrum resource, the communication transmission direction comprising at least one of: uplink, downlink, flexible, or sidelink;
time-domain resource information for allowing the first network device to perform communication using the first spectrum resource;
frequency-domain resource information for allowing the first network device to perform communication using the first spectrum resource;
space-domain resource information for allowing the first network device to perform communication using the first spectrum resource;
a timing reference of the first communication network; or
a timing reference of the second communication network.

46. The device of any one of claims 41 to 45, wherein the carrier attribute comprises one or more of:
a time unit configuration pattern, used for determining time-domain resource information for allowing the first network device to perform communication using the first spectrum resource, and/or time-domain resource information for allowing the second network device to perform communication using the first spectrum resource;
frequency-domain unit configuration information, used for determining frequency-domain resource information for allowing the first network device to perform communication using the first spectrum resource, and/or frequency-domain resource information for allowing the second network device to perform communication using the first spectrum resource; or
Quasi Co-Location (QCL) configuration information, used for determining space-domain resource information for allowing the first network device to perform communication using the first spectrum resource, and/or space-domain resource information for allowing the second network device to perform communication using the first spectrum resource.

47. The device of claim 46, wherein the time unit configuration pattern comprises a first uplink-downlink configuration pattern and/or a second uplink-downlink configuration pattern, wherein the first uplink-downlink configuration pattern is an uplink-downlink configuration pattern of the first communication network, the second uplink-downlink configuration pattern is an uplink-downlink configuration pattern of the second communication network, and the uplink-downlink configuration pattern configures a communication transmission direction of each time unit on the first spectrum resource as one of uplink, downlink, or flexible.

48. The device of claim 47, wherein in a case that a sharing manner of the first spectrum resource comprises time division multiplexing,
if a first time unit is configured as a time unit for uplink communication in the second uplink-downlink configuration pattern, the first time unit is unable to be configured as a time unit for uplink communication in the first uplink-downlink configuration pattern;
and/or,
if a second time unit is configured as a time unit for downlink communication in the second uplink-downlink configuration pattern, the second time unit is unable to be configured as a time unit for downlink communication in the first uplink-downlink configuration pattern.

49. The device of any one of claims 46 to 48, wherein the frequency-domain unit configuration information is used for determining a first frequency-domain bandwidth part and/or a second frequency-domain bandwidth part, wherein the first frequency-domain bandwidth part is a frequency-domain unit used by the first communication network, and the second frequency-domain bandwidth part is a frequency-domain unit used by the second communication network.

50. The device of claim 49, wherein in a case that a sharing manner of the first spectrum resource comprises frequency division multiplexing, the first frequency-domain bandwidth part and the second frequency-domain bandwidth part do not overlap in a frequency domain.

51. The device of any one of claims 46 to 50, wherein the QCL configuration information is used for determining a first beam direction and/or a second beam direction, wherein the first beam direction is a beam direction used by the first communication network and the second beam direction is a beam direction used by the second communication network.

52. The device of claim 51, wherein the QCL configuration information is used for determining at least one of: a first Synchronization Signal/Physical Broadcast Channel (PBCH) Block (SSB) set, a second SSB set, or a third SSB set, wherein the first SSB set comprises part or all of SSBs transmitted in the first communication network, the second SSB set comprises part or all of SSBs transmitted in the second communication network, and the third SSB set comprises part or all of SSBs received in the first communication network that are transmitted in the second communication network.

53. The device of any one of claims 41 to 52, further comprising:
a sending module, configured to send second information to the second network device, the second information being used for determining at least one of:
a request to the second network device for using the first spectrum resource;
a timing reference of the first communication network; or
a timing reference of the second communication network.

54. The device of any one of claims 41 to 53, wherein the first communication network is a Non Terrestrial Network (NTN) and the second communication network is a Terrestrial Network (TN).

55. The device of claim 54, wherein the first information is used for determining at least one of:
first location information, the first location information is location information of the second network device; or
a second Synchronization Signal/Physical Broadcast Channel (PBCH) Block (SSB) set, the second SSB set comprising part or all of SSBs transmitted in the second communication network.

56. The device of claim 54 or 55, wherein the second information sent to the second network device is used for determining at least one of:
a first offset, the first offset being determined based on a round trip delay of a communication link between a first reference point in the first communication network and a first terminal device in the first communication network;
a second offset, the second offset being determined based on a round trip delay of a communication link between the first reference point in the first communication network and the first network device;
first ephemeris information, the first ephemeris is ephemeris information in the first communication network;
a first Synchronization Signal/Physical Broadcast Channel (PBCH) Block (SSB) set, the first SSB set comprising part or all of SSBs transmitted in the first communication network; or
a third SSB set, the third SSB set comprising part or all of SSBs received in the first communication network that are transmitted in the second communication network.

57. The device of any one of claims 41 to 53, wherein the first communication network is a Terrestrial Network (TN) and the second communication network is a Non Terrestrial Network (NTN).

58. The device of claim 57, wherein the first information is used for determining at least one of:
a third offset, the third offset being determined based on a round trip delay of a communication link between a second reference point in the second communication network and a second terminal device in the second communication network;
a fourth offset, the fourth offset being determined based on a round trip delay of a communication link between the second reference point in the second communication network and the second network device;
second ephemeris information, the second ephemeris information is ephemeris information in the second communication network; or
a second Synchronization Signal/Physical Broadcast Channel (PBCH) Block (SSB) set, the second SSB set comprising part or all of SSBs transmitted in the second communication network.

59. The device of claim 57 or 58, wherein the second information sent to the second network device is used for determining at least one of:
second location information, the second location information is location information of the first network device;
a first Synchronization Signal/Physical Broadcast Channel (PBCH) Block (SSB) set, the first SSB set comprising part or all of SSBs transmitted in the first communication network; or
a third SSB set, the third SSB set comprising part or all of SSBs received in the first communication network that are transmitted in the second communication network.

60. The device of claim 56 or 59, wherein the SSBs received in the first communication network that are transmitted in the second communication network comprise:
SSBs received by the first network device that are transmitted in the second communication network; and/or
SSBs received by the terminal device in the first communication network that are transmitted in the second communication network.

61. A device for wireless communication, comprising:
a sending module, configured to send first information to a first network device, the first information being used for determining whether the first network device is allowed to perform communication using a first spectrum resource, wherein the first spectrum resource is a spectrum resource used by a second network device for communication, the first network device is a network device in a first communication network, the second network device is a network device in a second communication network, and the first communication network and the second communication network are different communication networks; and

62. The device of claim 61, wherein the first spectrum resource is a shared spectrum resource, the shared spectrum resource being a spectrum resource shared by the second network device and the first network device, or the shared spectrum resource being a spectrum resource shared by the second communication network and the first communication network.

63. The device of claim 61 or 62, wherein the first spectrum resource is a Frequency Division Duplexing (FDD) spectrum, or the first spectrum resource is a Time-Division Duplex (TDD) spectrum.

64. The device of any one of claims 61 to 63, wherein the first spectrum resource is used for downlink communication, and/or, the first spectrum resource is used for uplink communication.

65. The device of any one of claims 61 to 64, wherein the first information is used for determining at least one of:
the first network device is allowed to performing communication using the first spectrum resource;
the first network device is disallowed to perform communication using the first spectrum resource;
a sharing manner of the first spectrum resource, the sharing manner comprising at least one of: time division multiplexing, frequency division multiplexing, or space division multiplexing;
a communication transmission direction for sharing the first spectrum resource, the communication transmission direction comprising at least one of: uplink, downlink, flexible, or sidelink;
time-domain resource information for allowing the first network device to perform communication using the first spectrum resource;
frequency-domain resource information for allowing the first network device to perform communication using the first spectrum resource;
space-domain resource information for allowing the first network device to perform communication using the first spectrum resource;
a timing reference of the first communication network; or
a timing reference of the second communication network.

66. The device of any one of claims 61 to 65, wherein the carrier attribute comprises one or more of:
a time unit configuration pattern, used for determining time-domain resource information for allowing the first network device to perform communication using the first spectrum resource, and/or time-domain resource information for allowing the second network device to perform communication using the first spectrum resource;
frequency-domain unit configuration information, used for determining frequency-domain resource information for allowing the first network device to perform communication using the first spectrum resource, and/or frequency-domain resource information for allowing the second network device to perform communication using the first spectrum resource; or
Quasi Co-Location (QCL) configuration information, used for determining space-domain resource information for allowing the first network device to perform communication using the first spectrum resource, and/or space-domain resource information for allowing the second network device to perform communication using the first spectrum resource.

67. The device of claim 66, wherein the time unit configuration pattern comprises a first uplink-downlink configuration pattern and/or a second uplink-downlink configuration pattern, wherein the first uplink-downlink configuration pattern is an uplink-downlink configuration pattern of the first communication network, the second uplink-downlink configuration pattern is an uplink-downlink configuration pattern of the second communication network, and the uplink-downlink configuration pattern configures a communication transmission direction of each time unit on the first spectrum resource as one of uplink, downlink, or flexible.

68. The device of claim 67, wherein in a case that a sharing manner of the first spectrum resource comprises time division multiplexing,
if a first time unit is configured as a time unit for uplink communication in the second uplink-downlink configuration pattern, the first time unit is unable to be configured as a time unit for uplink communication in the first uplink-downlink configuration pattern;
and/or,
if a second time unit is configured as a time unit for downlink communication in the second uplink-downlink configuration pattern, the second time unit is unable to be configured as a time unit for downlink communication in the first uplink-downlink configuration pattern.

69. The device of any one of claims 66 to 68, wherein the frequency-domain unit configuration information is used for determining a first frequency-domain bandwidth part and/or a second frequency-domain bandwidth part, wherein the first frequency-domain bandwidth part is a frequency-domain unit used by the first communication network, and the second frequency-domain bandwidth part is a frequency-domain unit used by the second communication network.

70. The device of claim 69, wherein in a case that a sharing manner of the first spectrum resource comprises frequency division multiplexing, the first frequency-domain bandwidth part and the second frequency-domain bandwidth part do not overlap in a frequency domain.

71. The device of any one of claims 66 to 70, wherein the QCL configuration information is used for determining a first beam direction and/or a second beam direction, wherein the first beam direction is a beam direction used by the first communication network and the second beam direction is a beam direction used by the second communication network.

72. The device of claim 71, wherein the QCL configuration information is used for determining at least one of: a first Synchronization Signal/Physical Broadcast Channel (PBCH) Block (SSB) set, a second SSB set, or a third SSB set, wherein the first SSB set comprises part or all of SSBs transmitted in the first communication network, the second SSB set comprises part or all of SSBs transmitted in the second communication network, and the third SSB set comprises part or all of SSBs received in the first communication network that are transmitted in the second communication network.

73. The device of any one of claims 61 to 72, further comprising:
a receiving module, configured to receive second information sent by the first network device, the second information being used for determining at least one of:
a request to the second network device for using the first spectrum resource;
a timing reference of the first communication network; or
a timing reference of the second communication network.

74. The device of any one of claims 61 to 73, wherein the first communication network is a Non Terrestrial Network (NTN) and the second communication network is a Terrestrial Network (TN).

75. The device of claim 74, wherein the first information is used for determining at least one of:
first location information, the first location information is location information of the second network device; or
a second Synchronization Signal/Physical Broadcast Channel (PBCH) Block (SSB) set, the second SSB set comprising part or all of SSBs transmitted in the second communication network.

76. The device of claim 74 or 75, wherein the second information is used for determining at least one of:
a first offset, the first offset being determined based on a round trip delay of a communication link between a first reference point in the first communication network and a first terminal device in the first communication network;
a second offset, the second offset being determined based on a round trip delay of a communication link between the first reference point in the first communication network and the first network device;
first ephemeris information, the first ephemeris is ephemeris information in the first communication network;
a first Synchronization Signal/Physical Broadcast Channel (PBCH) Block (SSB) set, the first SSB set comprising part or all of SSBs transmitted in the first communication network; or
a third SSB set, the third SSB set comprising part or all of SSBs received in the first communication network that are transmitted in the second communication network.

77. The device of any one of claims 61 to 73, wherein the first communication network is a Terrestrial Network (TN) and the second communication network is a Non Terrestrial Network (NTN).

78. The device of claim 77, wherein the first information is used for determining at least one of:
a third offset, the third offset being determined based on a round trip delay of a communication link between a second reference point in the second communication network and a second terminal device in the second communication network;
a fourth offset, the fourth offset being determined based on a round trip delay of a communication link between the second reference point in the second communication network and the second network device;
second ephemeris information, the second ephemeris information is ephemeris information in the second communication network; or
a second Synchronization Signal/Physical Broadcast Channel (PBCH) Block (SSB) set, the second SSB set comprising part or all of SSBs transmitted in the second communication network.

79. The device of claim 77 or 78, wherein the second information sent to the second network device is used for determining at least one of:
second location information, the second location information is location information of the first network device;
a first Synchronization Signal/Physical Broadcast Channel (PBCH) Block (SSB) set, the first SSB set comprising part or all of SSBs transmitted in the first communication network; or
a third SSB set, the third SSB set comprising part or all of SSBs received in the first communication network that are transmitted in the second communication network.

80. The device of claim 76 or 79, wherein the SSBs received in the first communication network that are transmitted in the second communication network comprise:
SSBs received by the first network device that are transmitted in the second communication network; and/or
SSBs received by the terminal device in the first communication network that are transmitted in the second communication network.

81. A network device, comprising a processor and a memory, wherein the memory stores a computer program, and the processor executes the computer program to implement the method of any one of claims 1 to 20, or implement the method of any one of claims 21 to 40.

82. A computer-readable storage medium having stored thereon a computer program that, when executed by a processor, implements the method of any one of claims 1 to 20 or implements the method of any one of claims 21 to 40.

83. A chip, comprising programmable logic circuit and/or program instructions for implementing, when the chip is running, the method of any one of claims 1 to 20 or the method of any one of claims 21 to 40.

84. A computer program product comprising computer instructions stored in a computer-readable storage medium, wherein a processor reads and executes the computer instructions from the computer-readable storage medium to implement the method of any one of claims 1 to 20 or the method of any one of claims 21 to 40.
